Europäisches Patentamt

European Patent Office

Office européen des brevets

(19)

(11) Numéro de publication: **0 296 928 B1**

## FASCICULE DE BREVET EUROPEEN

(12)

(45) Date de publication de fascicule du brevet: **19.08.92**  (51) Int. Cl.⁵: **H04L 12/66**

(21) Numéro de dépôt: **88401428.3**

(22) Date de dépôt: **10.06.88**

(54) **Equipement de reconstitution et multiplexage de trames d'origines diverses constituées de paquets de longueur fixe en nombre variable.**

(30) Priorité: **15.06.87 FR 8708286**

(43) Date de publication de la demande:
**28.12.88 Bulletin 88/52**

(45) Mention de la délivrance du brevet:
**19.08.92 Bulletin 92/34**

(84) Etats contractants désignés:
**BE DE GB IT NL**

(56) Documents cités:
**EP-A- 0 113 639**
**FR-A- 2 472 245**
**FR-A- 2 539 939**
**US-A- 3 979 733**

**PROCEEDINGS OF THE INTERNATIONAL SWITCHING SYMPOSIUM, 7-11 mai 1984, ISS '84 Florence, session 32C, paper 2, pages 1-7, New York, US; A. THOMAS et al.: "Asynchronious time-division techniques: An experimental packet network integrating videocommunication"**

(73) Titulaire: **Lespagnol, Albert**
**33, rue de Landerval**
**F-22700 Perros-Guirec(FR)**

Titulaire: **Ouinquis, Jean-Paul**
**14, rue de Cornic**
**F-22700 Perros Guirec(FR)**

Titulaire: **Kerberenes, Jacques**
**Kerlan Servel**
**F-22300 Lannion(FR)**

(72) Inventeur: **Lespagnol, Albert**
**33, rue de Landerval**
**F-22700 Perros-Guirec(FR)**
Inventeur: **Ouinquis, Jean-Paul**
**14, rue de Cornic**
**F-22700 Perros Guirec(FR)**
Inventeur: **Kerberenes, Jacques**
**Kerlan Servel**
**F-22300 Lannion(FR)**

(74) Mandataire: **Cabinet Martinet & Lapoux**
**BP 405**
**F-78055 Saint Ouentin en Yvelines Cédex(FR)**

INTERNATIONAL SWITCHING SYMPOSIUM, 1987, vol. 2, pages 367-372, Phoenix, US; M. DIEUDONNE et al.: "Switching techniques for asynchronous time division multiplexing (or fast packet switching)"

**Description**

La présente invention concerne de manière générale un équipement recevant des paquets appartenant à différentes trames d'origines diverses convoyées sous forme entrelacée par un multiplex temporel asynchrone entrant pour regrouper les paquets de chacune des trames et retransmettre en série les trames reconstituées dans un unique support de tranmission sortant.

Les paquets ont tous une même longueur et sont convoyés dans le multiplex temporel asynchrone entrant. Une trame est constituée de paquets relatifs à une même liaison de communication de longueur quelconque en nombre de bits. Les paquets d'une même liaison sont identifiés par une même étiquette incluse en en-tête des paquets. Les premier et dernier paquets d'une trame entrante comprennent respectivement un drapeau d'ouverture de trame et un drapeau de fermeture de trame. Le format des trames peut être conforme à la norme HDLC. La transmission d'une trame dans le support de transmission sortant consiste à transmettre en série tous les bits de la trame, selon un même ordre que leur ordre d'arrivée dans l'équipement. Entre des trames reconstituées sont transmis des drapeaux cadrés.

La résolution du problème de la reconstitution de telles trames a été posée dans le cadre de l'étude prospective dite PRELUDE, menée par l'Administration Française des Postes et Télécommunications et concernant un réseau numérique temporel asynchrone à large bande (RTA). En particulier, la reconstitution des trames est nécessaire dans des commutateurs locaux du réseau RTA et dans des passerelles entre le réseau RTA et des réseaux de transmission de paquets du type TRANSPAC.

Par exemple un équipement selon l'invention inclus dans un commutateur local à division asynchrone du temps a pour fonction de recomposer des trames de signalisation à partir de paquets entrants de signalisation afin de transmettre les trames recomposées à un noeud de signalisation assurant leur traitement. Dans un commutateur à division asynchrone du temps, tous les paquets de signalisation entrants confluent vers une ou plusieurs files d'attente de signalisation. L'équipement est connecté en entrée à une file d'attente de signalisation et reçoit les paquets entrants de signalisation délivrés par celle-ci.

Par ailleurs, un réseau temporel asynchrone doit cohabiter au moins pendant toute la phase transitoire de son implantation, avec les réseaux de transmission de paquets existants tels que le réseau de type TRANSPAC. En d'autres termes, il doit être possible d'établir des liaisons de données entre des terminaux connectés au réseau temporel asynchrone et des terminaux connectés au réseau de type Transpac. Le passage d'un réseau à l'autre se fait par des passerelles. Dans le sens de transmission du réseau temporel asynchrone vers le réseau de type Transpac, un équipement selon l'invention a pour fonction de recomposer les trames à partir de paquets délivrés par le réseau temporel asynchrone avant un traitement de celles-ci par une passerelle.

En ce qui concerne la structure de l'équipement selon l'invention, celui-ci comprend quatre mémoires et des moyens pour établir des adresses de premières cases tels qu'énoncés dans le préambule de la revendication 1 et dont le fonctionnement fait appel au procédé de chaînage d'adresses en écriture et lecture relatives aux paquets d'une trame, appelés "mots de file", selon les Figs. 1 à 3 de la FR-A-2472245. Pour écrire un mot d'une file, le mot est rangé dans l'une des premières cases disponibles de la première mémoire dont l'adresse est fournie par les moyens pour établir contenant une mémoire d'adresses disponibles. Cette dernière adresse est introduite dans la cellule de la troisième mémoire correspondant au numéro de la file et est chargée dans la seconde case de la seconde mémoire dont l'adresse est celle lue dans la cellule de la troisième mémoire et est égale à l'adresse de la première case où a été écrit le mot de la file précédant le mot à écrire. Lorsque le paquet à écrire est le premier mot de la "file", l'adresse de la première case où a été écrit le premier mot est également écrite dans la quatrième mémoire à une adresse correspondant au numéro de la file. Pour lire un premier mot ou mot mémorisé le plus ancien d'une file, l'adresse de la première case où est mémorisé ce premier mot est lue dans'la quatrième mémoire afin de lire cette première case et fournir le premier mot, et lire la seconde case pour charger dans la quatrième mémoire l'adresse de première case relative au mot suivant de la file à la place de l'adresse précédemment lue, cette dernière devenant disponible étant transmise à la mémoire des moyens pour établir.

Ce procédé de chaînage d'adresses relatif à la succession de mots dans une file est contrôlé par un terminal informatique d'utilisateur pour stocker des mots de données, tels que des pages, suivant un ordre prédéterminé. L'écriture ou la lecture de chaque mot résulte de la traduction d'instructions transmises à un organe de séquencement qui gère selon un programme de commande un organe de stockage comportant les mémoires précitées. Les écritures et les lectures des mots d'une file ne sont pas enchaînées automatiquement, mais sont effectuées de manière discrète à la demande de l'utilisateur. En fait, d'une manière plus générale, selon une autre variante de la FR-A-2472245, l'organe de stockage permet de

EP 0 296 928 B1

supprimer ou de lire, et de mémoriser ou d'écrire une page numérotée dans un ensemble de pages ordonnées.

La présente invention vise à fournir un équipement mettant en oeuvre le procédé de chaînage d'adresses connu évoqué ci-dessus et recevant des paquets entrants asynchrones de trames entrelacées pour reconstituer automatiquement des trames de paquets multiplexées au fur et à mesure de la réception complète des trames entrelacées et selon leur ordre d'arrivée.

A cette fin, un équipement selon l'invention est tel que défini dans la revendication 1.

L'invention sera mieux comprise à la lecture de la description suivante de plusieurs réalisations préférées d'un équipement selon l'invention en référence aux dessins annexés correspondants dans lesquels :

- la Fig. 1 est un bloc-diagramme d'un équipement de reconstitution et multiplexage de trames selon l'invention;
- la Fig. 2 montre la reconstitution de trames à partir de paquets correspondants entrelacés entrant dans l'équipement;
- la Fig. 3 montre la structure de paquets dans des trames;
- la Fig. 4 est un bloc-diagramme détaillé d'un circuit de détection et de gestion d'écriture de paquet inclus dans l'équipement;
- la Fig. 5 est un chronogramme relatif au fonctionnement du circuit montré à la Fig. 4;
- la Fig. 6 montre différentes possibilités de transmission d'un drapeau de fermeture de trame contenu dans deux octets consécutifs d'un même paquet;
- la Fig. 7 est un bloc-diagramme d'un circuit de mémorisation et de gestion d'adresses de mémoire inclus dans l'équipement;
- la Fig. 8 est un bloc-diagramme détaillé d'un circuit de lecture et transmission de trame inclus dans l'équipement;
- la Fig. 9 est un chronogramme relatif à un adressage en lecture de paquets établi par le circuit montré à la Fig. 8;
- la Fig. 10 est un chronogramme relatif à une conversion parallèle-série d'octet réalisée dans un circuit de transmission de trame de l'équipement; et
- la Fig. 11 montre la transmission de drapeaux encadrant chacune des trames transmises par l'équipement.

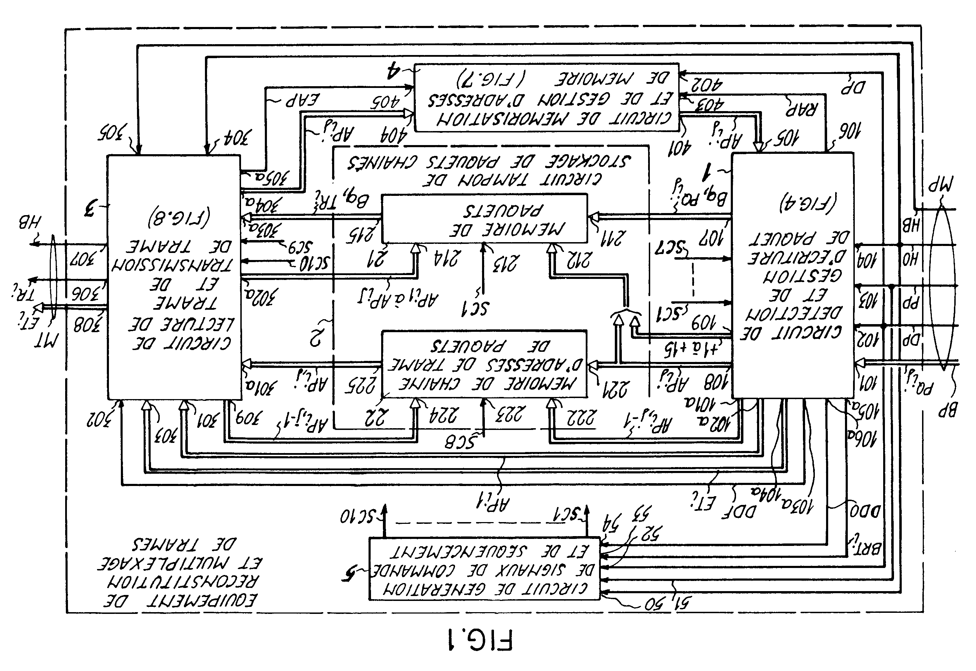

Comme montré à la Fig. 1, un équipement de reconstitution et multiplexage de trames selon l'invention comprend un circuit de détection et de gestion d'écriture de paquet 1, un circuit tampon de stockage de paquets chaînés 2, un circuit de lecture et transmission de trame 3, un circuit de mémorisation et de gestion d'adresses de mémoire 4, et un circuit de génération de signaux de commande et de séquencement 5.

Le circuit 1 reçoit par huit entrées parallèles d'octet de paquet 101 des paquets PQ. Le terme "paquet" est ici utilisé dans son sens le plus général et non au sens qui lui est attribué par le standard de transmission X25. Les paquets PQ sont constitués chacun de L = 16 octets, B0 à B15, multiplexés temporellement dans un bus de paquet BP connecté aux entrées 101. Les huit bits d'un octet de paquet sont transmis en parallèle dans le bus BP. Le bus BP est un bus de transmission de données d'un multiplex temporel asynchrone de paquet MP, issu, par exemple, d'un commutateur temporel asynchrone de paquet d'un réseau temporel asynchrone. Des entrées 102, 103 et 104 reçoivent respectivement des signaux de signalisation DP, PP et un signal d'horloge d'octet HO. Les entrées 101 à 104 constituent un port d'entrée de l'équipement relié au multiplex MP. Le signal DP indique le début de la transmission d'un paquet PQ, et est à un état logique "1" pendant la réception du premier octet BO de ce paquet. Le signal PP signale la présence d'un paquet PQ dans le bus BP. Le signal PP est à l'état "1" pendant la transmission des L = 16 octets, B0 à B15, d'un paquet PQ. Le premier octet BO d'un paquet PQ constitue une étiquette ET identifiant une liaison de communication. Les paquets relatifs à une même liaison de communication ont des étiquettes identiques et constituent une succession de trames longueur variable. Une pluralité de trames de paquets TR correspondant respectivement à une pluralité de liaisons de communication sont transmises dans le bus BP. Les différentes trames TR sont imbriquées les unes dans les autres. La transmission des paquets dans le multiplex MP est asynchrone et les paquets constituant une même trame sont reçus aux entrées 101 à des instants indéterminés.

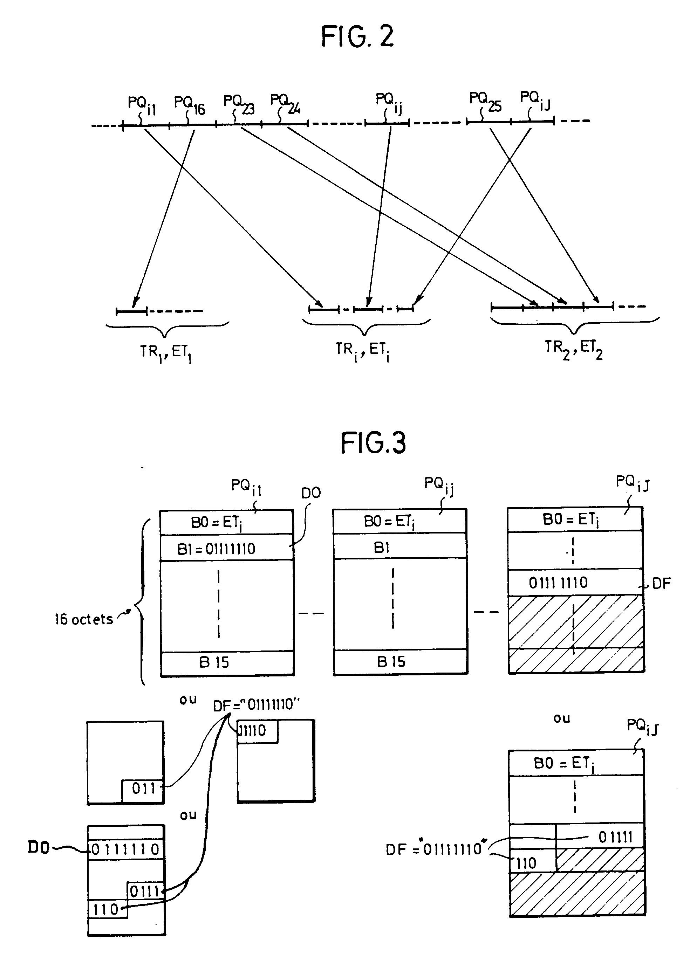

La Fig. 2 montre une trame $TR_i$ composée de J paquets $PQ_{i1}, \dots PQ_{ij}, \dots PQ_{iJ}$, où i est un indice entier quelconque désignant la trame, J est un entier de valeur variable représentatif d'une longueur de trame, et j est un indice entier compris entre 1 et J. Les paquets $PQ_{i1}$ à $PQ_{iJ}$ ont une même étiquette $ET_i$. Entre la réception des différents paquets $PQ_{i1}$ à $PQ_{iJ}$ de la trame $TR_i$ d'autres paquets $PQ_{16}$, $PQ_{23}$, $PQ_{24}$, $PQ_{25}$ de trames $TR_1$, $TR_2$ en cours de réception sont également reçus aux entrées 101.

4

Comme montré à la Fig. 3, le premier paquet $PQ_{i1}$ de la trame $TR_i$ comprend un drapeau d'ouverture de trame DO qui est constitué par le second octet B1 du paquet $PQ_{i1}$. Le dernier paquet $PQ_{iJ}$ de la trame $TR_i$ comprend un drapeau de fermeture de trame DF qui peut être un octet de rang quelconque dans le paquet $PQ_{iJ}$ autre que l'octet BO constituant l'étiquette $ET_i$, ou être plus généralement contenu dans deux octets consécutifs autres que l'octet BO ou être contenu dans deux paquets consécutifs de même étiquette ou enfin être contenu dans le même paquet que le paquet contenant le paquet d'ouverture DO. Les bits et octets du paquet $PQ_{iJ}$ postérieurs à la réception du drapeau de fermeture DF ne sont pas pris en compte; ils ne correspondent à aucune information valide. Les drapeaux d'ouverture de trame DO et de fermeture de trame DF peuvent être constitués d'une même combinaison binaire, égale à "01111110" dans le cas, par exemple, du protocole de transmission de donnée HDLC.

Le circuit 1 détecte les drapeaux d'ouverture DO et de fermeture DF ainsi que les étiquettes $ET_i$ afin de gérer l'écriture dans le circuit tampon 2 de chaque paquet $PQ_{ij}$ reçu par l'équipement.

Le circuit de mémorisation et de gestion d'adresses de mémoire 4 délivre au circuit 1, pour chaque paquet en cours de réception, l'adresse d'une case de mémoire disponible dans le circuit tampon 2 où peut être écrit le paquet en cours de réception. Dès le début de la réception d'un paquet $PQ_{ij}$ aux entrées 101 du circuit 1, une adresse $AP_{ij}$ est fournie à des entrées parallèles 105 du circuit 1 par des sorties parallèles 401 du circuit de mémorisation et de gestion d'adresses de mémoire 4. L'adresse $AP_{ij}$ fournie par le circuit 4 est l'adresse d'une case de mémoire de paquet disponible dans une mémoire de paquets 21 du circuit tampon 2. L'adresse $AP_{ij}$ est délivrée par le circuit 4 sous la commande du signal de début de paquet DP appliqué à une entrée 402 du circuit 4. Un signal d'accusé de réception RAP est transmis par une sortie 106 du circuit 1 à une entrée 403 du circuit 4 après la prise en compte de l'adresse $AP_{ij}$ par le circuit 1. Dans la case de mémoire d'adresse $AP_{ij}$ de la mémoire 21 est écrit le paquet $PQ_{ij}$ de la trame $TR_i$. Le paquet $PQ_{ij}$ est fourni par des sorties parallèles 107 du circuit 1 à des entrées parallèles de donnée 211 de la mémoire de paquets 21. Les sorties 107 délivrent le paquet $PQ_{ij}$ octet par octet au rythme du signal HO.

Le mémoire 21 comprend N cases de mémoire de paquet, où N est un entier déterminé en fonction d'un débit de paquets dans le bus BP et d'un nombre statistique moyen de paquets dans une trame. Chacune des cases de mémoire de paquet est divisée en L - 1 = 15 cases de mémoire d'octet, l'étiquette $ET_i$ d'un paquet $PQ_{ij}$ n'étant pas écrite en mémoire 21. Ainsi, la case de mémoire de paquet d'adresse $AP_{ij}$ est divisée en L - 1 = 15 cases de mémoire d'octet respectivement d'adresses $AP_{ij}$ + 1, $AP_{ij}$ +2,... $AP_{ij}$ + 15 dans lesquelles sont écrits respectivement les octets B1, B2, ...B15 du paquet $PQ_{ij}$; la case d'adresse $AP_{ij}$ + 1 contient le drapeau d'ouverture de trame DO dans le cas où $AP_{ij}$ = $AP_{i1}$.

L'adresse $AP_{ij}$, fournie par le circuit 4, de la case dans laquelle est écrit un paquet $PQ_{ij}$ dans la mémoire 21 est délivrée à la mémoire 21 via des sorties parallèles d'adresse 108 du circuit 1. Des incréments +1, +2, ...., +15 sont fournis par d'autres sorties parallèles d'adresse 109 du circuit 1 au rythme du signal HO. Les sorties parallèles 108 et 109 sont connectées respectivement, fil à fil, à des entrées parallèles d'adresse d'écriture 212 de la mémoire 21 de telle sorte que les L - 1 = 15 adresses $AP_{ij}$ + 1 à $AP_{ij}$ + 15 sont appliquées aux entrées d'adresse 212 parallèlement aux L - 1 = 15 octets B1 à B15 du paquet $PQ_{ij}$ fournis aux entrées de donnée 211. L'adresse $AP_{ij}$ est également fournie par les sorties d'adresse 108 du circuit 1 à des entrées parallèles de donnée 221 d'une mémoire de chaîne d'adresses de trame de paquets 22 incluse dans le circuit tampon 2.

La mémoire 22 a pour fonction de mémoriser les adresses $AP_{ij}$ des paquets $PQ_{ij}$ au fur et à mesure de leur écriture dans la mémoire de paquets 21. Lorsqu'une trame de paquets complète $TR_i$ a été écrite dans la mémoire de paquets 21, les adresses $AP_{i1}$ à $AP_{iJ}$ des paquets $PQ_{i1}$ à $PQ_{iJ}$, respectivement, sont mémorisées dans la mémoire 22. Les adresses $AP_{i1}$ à $AP_{iJ}$ sont mémorisées sous la forme d'une chaîne d'adresses afin que le circuit de lecture et transmission de trame 3 puisse accéder, dans la mémoire 21, à l'ensemble des paquets de la trame $TR_i$ en ne connaissant au départ que l'adresse $AP_{i1}$ du premier paquet $PQ_{i1}$ de la trame $TR_i$. La mémoire 22 comprend N cases de mémoire de mot d'adresse distinctes pour mémoriser chacune une adresse $AP_{ij}$ et respectivement assignées aux N cases de mémoire de paquet. Les N cases de mémoire d'adresse sont adressées par le circuit 1 à travers des sorties parallèles d'adresse 101a connectées fil à fil à des entrées parallèles d'adresse d'écriture 222 de la mémoire 22. Lorsqu'un paquet $PQ_{ij}$ est en cours d'écriture dans la mémoire 21, l'adresse $AP_{ij}$ est fournie aux entrées de donnée 221 de la mémoire 22. Cette adresse $AP_{ij}$ est écrite dans une case de la mémoire 22 ayant l'adresse $AP_{i,j-1}$. L'adresse $AP_{i,j-1}$ est l'adresse dans la mémoire 21 du paquet $PQ_{i,j-1}$ reçu dans le circuit 1 précédemment au paquet $PQ_{ij}$ en cours de réception. L'adresse $AP_{i,j-1}$ est contenue dans une cellule de mémoire, adressée par l'étiquette $ET_i$, d'une mémoire de commande incluse dans le circuit 1; elle est délivrée via les sorties 101a aux entrées d'adresse d'écriture 222 de la mémoire 22. Lorsqu'une trame complète $TR_i$ est contenue dans la mémoire de paquets 21, la mémoire 22 mémorise l'adresse $AP_{i2}$ dans la case de mémoire d'adresse $AP_{i1}$, ... l'adresse $AP_{ij}$ dans la case de mémoire d'adresse $AP_{i,j-1}$,... l'adresse $AP_{iJ}$ dans la case de mémoire d'adresse $AP_{i,J-1}$. Le circuit 3 auquel le circuit 1 fournit l'adresse $AP_{i1}$ du premier paquet $PQ_{i1}$ de la trame $TR_i$ accède, par des opérations de lecture successives de la mémoire 22, aux adresses $AP_{i1}$ à $AP_{iJ}$ des paquets $PQ_{i1}$ à $PQ_{iJ}$ mémorisés dans la mémoire 21.

L'adresse $AP_{i1}$ du premier paquet $PQ_{i1}$ d'une trame $TR_i$ est délivrée par des sorties parallèles 102a du circuit 1 à des entrées parallèles 301 du circuit 3 lorsqu'un drapeau de fermeture DF est détecté sur la trame $TR_i$ et qu'un signal de détection de drapeau de fermeture DDF à l'état "1" est fourni par une sortie 103a du circuit 1 à une entrée de commande d'écriture 302 du circuit 3. Parallèlement à l'adresse $AP_{i1}$, l'étiquette $ET_i$ est délivrée par des sorties parallèles 104a du circuit 1 à des entrées parallèles 303 du circuit 3.

Le circuit de génération de signaux de commande et de séquencement 5 est un circuit logique de conception classique, ayant pour fonction de générer différents signaux, SC1 à SC10, nécessaires à la commande et au séquencement d'opérations, principalement d'écriture et de lecture, effectuées dans les circuits 1 et 3, ainsi que dans le circuit tampon 2.

Le circuit 5 reçoit respectivement à des entrées 50, 51, 52, 53 et 54 les signaux HO, PP, DP, un bit de signalisation de réception de trame $BRT_i$ et un signal de détection de drapeau d'ouverture de trame DDO. A partir de ces signaux sont produits les signaux SC1 à SC10. Le bit $BRT_i$ et le signal DDO sont respectivement fournis par des sorties 105a et 106a du circuit 1. Le circuit 1 reçoit les signaux de commande et de séquencement SC1 à SC7. Le signal SC1 est délivré également à une entrée de sélection d'écriture/lecture 213 de la mémoire de paquets 21. Le signal SC8 est délivré à une entrée de sélection d'écriture/lecture 223 de la mémoire de chaîne d'adresses 22. Le circuit 3 reçoit les signaux SC9 et SC10.

Le circuit de lecture et transmission de trame 3 est chargé de lire les trames de paquets complètes mémorisées dans le circuit tampon 2 afin de les transmettre dans un support de transmission de trame MT vers, par exemple, un réseau de type TRANSPAC.

Le signal d'horloge de transmission d'octet HO et un signal d'horloge de transmission de bit HB, issus tous deux du multiplex MP, sont fournis respectivement à des entrées 304 et 305 du circuit 3. Le signal HB a une fréquence égale à huit fois la fréquence du signal HO. Un registre interne d'adresse de type FIFO (first in, first out) du circuit 3 mémorise les adresses $AP_{i1}$ des premiers paquets $PQ_{i1}$ des trames $TR_i$ reçues, c'est-à-dire des trames dont un drapeau de fermeture DF a été détecté. Ces trames sont mémorisées dans le circuit tampon 2. Le circuit 3 lit successivement tous les paquets $PQ_{i1}$ à $PQ_{iJ}$ d'une trame $TR_i$ et les transmet au fur et à mesure de leur lecture via une sortie 306, bit par bit, dans le support MT. Une sortie 307 du circuit 3 fournit le signal d'horloge de bit HB sur lequel est synchronisée la transmission des bits de paquet dans le support MT. Tout au long de la transmission d'une trame de paquets $TR_i$ dans le support MT, l'étiquette $ET_i$ correspondante est transmise dans le support MT sous forme parallèle par des sorties parallèles 308 du circuit 3. Les sorties 306 à 308 constituent dans le circuit 3 un port de sortie connecté au support MT.

Une case de la mémoire 22 contenant une adresse $AP_{ij}$ est adressée par le circuit 3 à travers des sorties parallèles d'adresse 309 reliées à des entrées parallèles d'adresse de lecture 224 de la mémoire de chaîne d'adresses 22. L'adresse $AP_{ij}$ contenue dans la case de mémoire adressée est délivrée via des sorties parallèles de donnée 225 de la mémoire 22 à des entrées parallèles d'adresse 301a du circuit 3. Une case de la mémoire 21 contenant un paquet $PQ_{ij}$ est adressée octet par otet au rythme du signal HO par le circuit 3 à travers d'autres sorties parallèles d'adresse 302a reliées à des entrées parallèles d'adresse de lecture 214 de la mémoire de paquets 21. Le paquet $PQ_{ij}$ contenu dans la case de mémoire adressée est délivré octet par octet par des sorties parallèles de données 215 de la mémoire de paquets 21 à huit entrées parallèles de trame 303a du circuit 3.

Pour lire une trame $TR_i$ mémorisée dans la mémoire 21, le circuit 3 adresse d'abord les mémoires 22 et 21 en appliquant aux entrées 224 et 214 les adresses $AP_{i1}$ et $AP_{i1}+2$ à $AP_{i1}+15$ fournies via les sorties 309 et 302a, respectivement. En réponse à l'adresse $AP_{i1}$ appliquée aux entrées 224, la mémoire 22 fournit au circuit 3, via les sorties de données 225, l'adresse $AP_{i2}$ qui sera utilisée ultérieurement pour la lecture en mémoire 2 du second paquet $PQ_{i2}$ de la trame $TR_i$. En réponse aux adresses $AP_{i1}+2$ à $AP_{i1}+15$ appliquées successivement aux entrées 214, la mémoire 21 fournit au circuit 3, via les sorties 215, respectivement les $L-2=14$ octets B2 à B15 du paquet $PQ_{i1}$ succédant au drapeau d'ouverture DO mémorisé dans la mémoire 21 à l'adresse $AP_{i1}+1$. De manière générale, tous les drapeaux DO et DF sont mémorisés dans la mémoire 21, mais seulement les drapeaux de fermeture DF sont lus par le circuit 3 afin que celui-ci puisse détecter la fin d'une trame de paquets en cours de transmission dans le support MT.

Pour lire le paquet $PQ_{i2}$, le circuit 3 fournit ensuite respectivement les adresses $AP_{i2}$ et $AP_{i2}+1$ à $AP_{i2}+15$ aux mémoires 22 et 21 afin de lire l'adresse $AP_{i3}$ à utiliser pour la lecture du paquet suivant $PQ_{i3}$ de la trame $TR_i$ et les $L-1=15$ octets d'information ou de signalisation B1 à B15 du paquet $PQ_{i2}$. Le circuit 3 lit chacun des paquets $PQ_{i3}$ à $PQ_{iJ}$ selon un cycle de lecture analogue à celui du paquet $PQ_{i2}$. Le paquet $PQ_{iJ}$

qui contient le drapeau de fermeture DF, est reconnu par le circuit 3 comme étant le dernier paquet de la trame $TR_i$. Le circuit 3 commence alors la lecture dans le circuit tampon 2 et la transmission dans le support MT d'une autre trame de paquets $TR_{i+1}$ dont l'adresse du premier paquet $AP_{i+1,1}$ est mémorisée dans le registre d'adresse FIFO du circuit 3 à la suite de l'adresse $AP_{i1}$.

Le circuit 3 est connecté au circuit de mémorisation et de gestion d'adresses de mémoire 4. Des sorties parallèles 304a et une sortie 305a du circuit 3 sont reliées respectivement à des entrées parallèles 404 et à une entrée 405 du circuit 4.

A la lecture d'un paquet $PQ_{ij}$ dans le circuit tampon 2, le circuit 3, via les sorties 304a fournit l'adresse $AP_{ij}$ où vient d'être lu dans la mémoire 21 le paquet $PQ_{ij}$, aux entrées 404 du circuit 4. En effet, après la lecture dans la mémoire 21 et la transmission dans le support MT du paquet $PQ_{ij}$, les cases de paquet et de mot d'adresse d'adresse $AP_{ij}$ dans les mémoires 21 et 22, deviennent disponibles pour une nouvelle utilisation par le circuit 1, pour des paquets entrants. L'adresse $AP_{ij}$ est écrite dans un registre de type FIFO du circuit 4 sous la commande d'un signal de commande d'écriture EAP à l'état "1", fourni par la sortie 305a du circuit 3 à l'entrée 405 du circuit 4. Cette adresse $AP_{ij}$ est stockée en file d'attente pour être délivrée aux entrées 105 du circuit 1, via les sorties 401 du circuit 4.

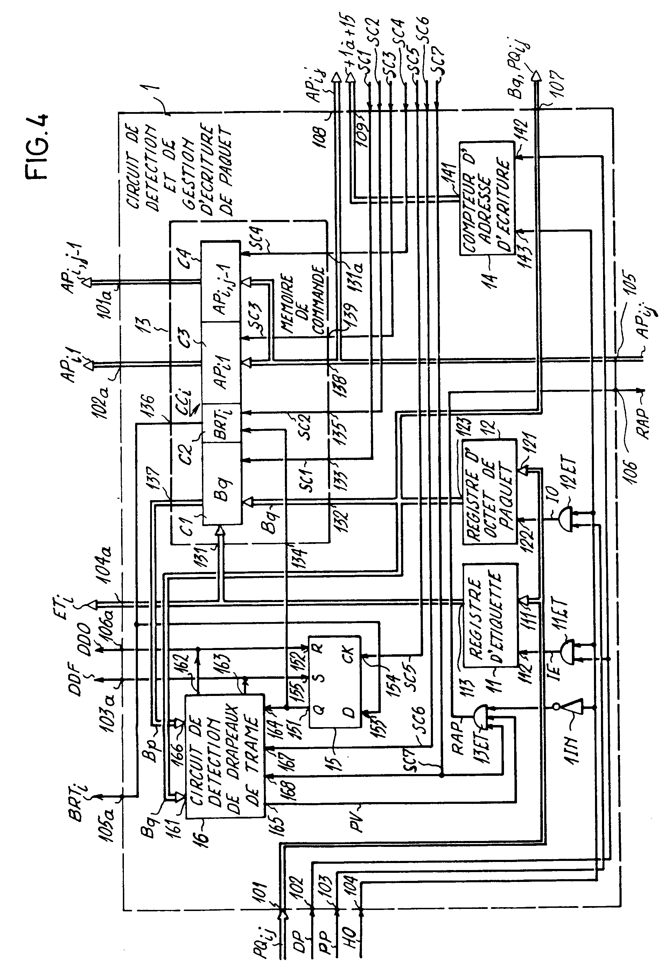

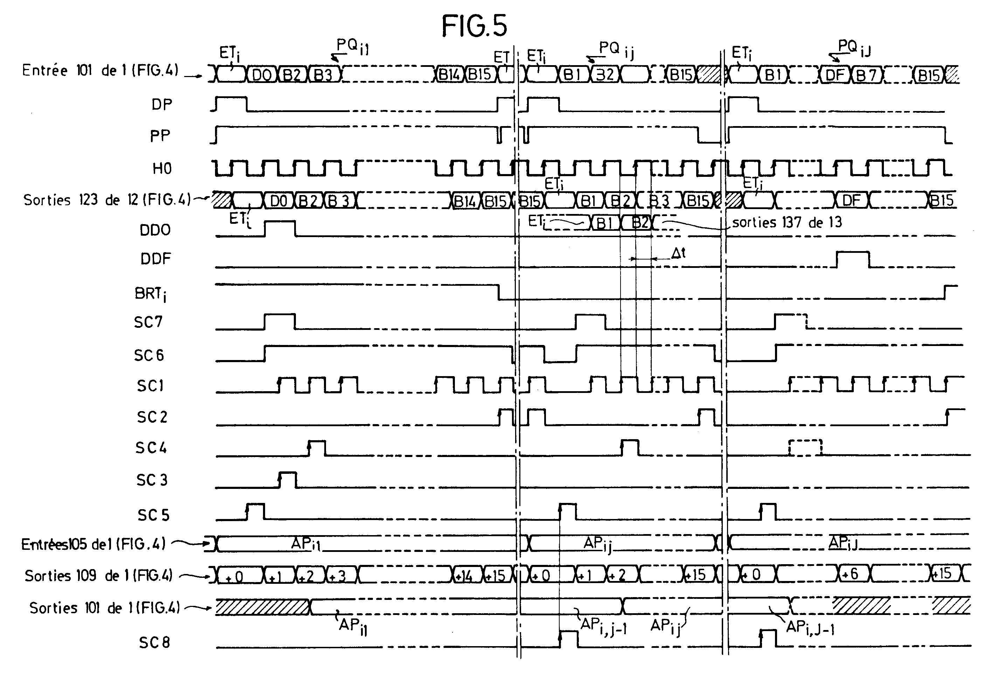

En référence à la Fig. 4, le circuit 1 de détection et de gestion d'écriture de paquet comprend essentiellement un registre d'étiquette 11, un registre d'octet de paquet 12, une mémoire de commande 13, un compteur d'adresse d'écriture 14, une bascule de bit de réception de trame 15, et un circuit de détection de drapeaux de trame 16.

Les registres 11 et 12 sont des registres-tampons à huit bits. Ils reçoivent tous les deux, octet par octet, respectivement à des entrées parallèles de données 111 et 121, des octets B0 à B15, de paquets entrants $PQ_{ij}$ issus du bus BP et présents successivement aux entrées parallèles 101 du circuit 1. Le registre 11 mémorise l'étiquette $ET_i$ d'un paquet $PQ_{ij}$ lorsqu'une impulsion de chargement d'étiquette IE à un état "1" est appliquée à une entrée de commande de chargement 112 du registre 11 fournie par une porte ET à deux entrées 11ET. Les entrées de la porte 11ET sont respectivement reliées aux entrées 102 et 104 du circuit 1 et reçoivent les signaux DP et HO. Le registre 12 mémorise l'octet entrant d'un paquet $PQ_{ij}$ en cours de réception lorsqu'une impulsion de chargement d'octet IO à un état "1" fournie par une sortie d'une porte ET à deux entrées 12ET, est appliquée à une entrée de commande de chargement 122 du registre 12. Les entrées de la porte 12ET reçoivent respectivement le signal PP et le signal HO via les entrées 103 et 104 du circuit 1.

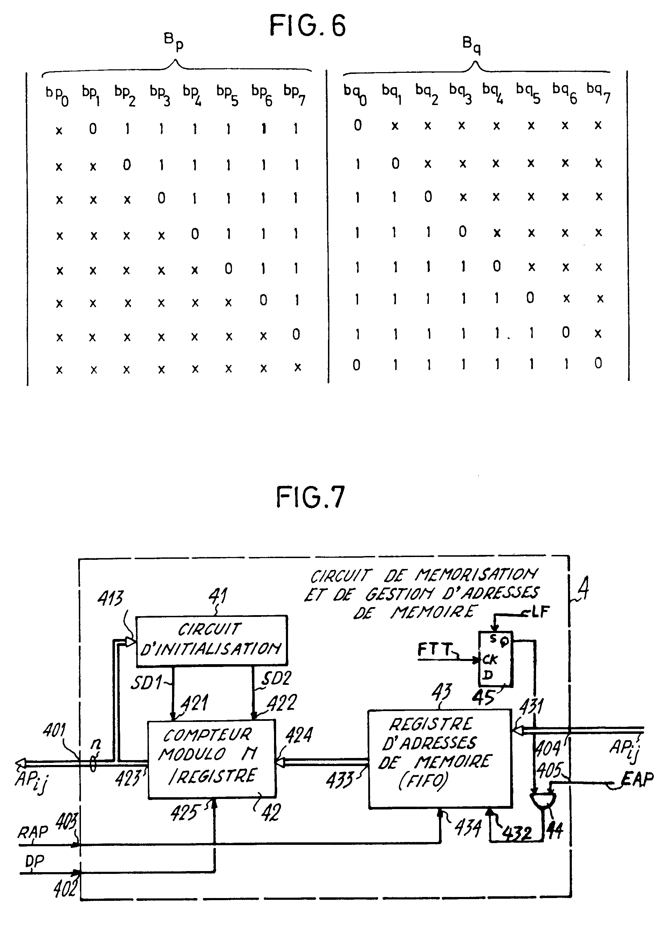

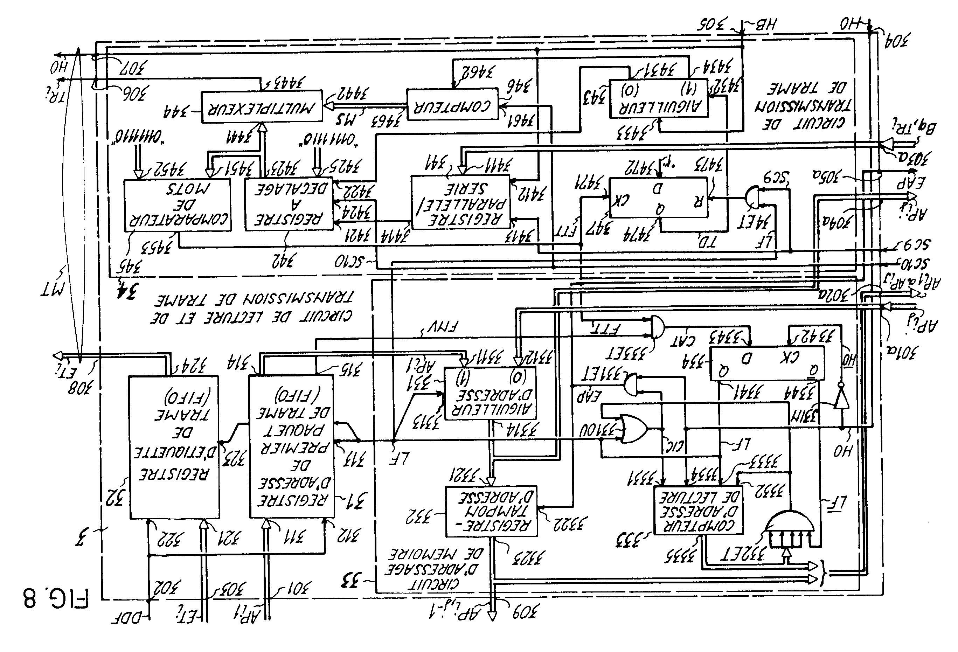

Des formes d'onde des signaux DP, PP et HO sont montrées, à titre d'exemple, en haut de la Fig. 5, pour des paquets entrants $PQ_{i1}$, $PQ_{ij}$, et $PQ_{iJ}$ d'une même trame de paquets $TR_i$. Les octets des paquets $PQ_{i1}$, $PQ_{ij}$, et $PQ_{iJ}$ sont numérotés de B0 à B15, par ordre chronologique d'arrivée aux entrées 101 du circuit 1. L'octet BO de chacun des paquets $PQ_{i1}$, $PQ_{ij}$, et $PQ_{iJ}$ est une étiquette $ET_i$. L'octet B1 du paquet $PQ_{i1}$ est un drapeau d'ouverture DO, l'octet B6 du paquet $PQ_{iJ}$ est un drapeau de fermeture DF.

A la cinquième ligne de la Fig. 5 sont montrés les octets B0 à B15 de chacun des paquets $PQ_{i1}$, $PQ_{ij}$ et $PQ_{iJ}$ délivrés par des sorties parallèles 123 du registre 12 à chaque front montant du signal d'horloge HO. L'étiquette $ET_i$ est chargée parallèlement dans les deux registres 11 et 12; elle reste présente à des sorties parallèles 113 du registre 11, connectées aux sorties 104a du circuit 1, pendant toute la durée de la réception d'un paquet et jusqu'à ce que le signal DP indique le début d'un paquet suivant et commande dans les registres 11 et 12 le chargement de son étiquette.

L'étiquette $ET_i$ présente aux sorties 113 du registre d'étiquette 11 est appliquée à des entrées d'adresse 131 de la mémoire de commande 13 et sélectionne dans cette mémoire 13 une cellule de commande $CC_i$ attribuée à la trame $TR_i$, d'étiquette $ET_i$, en cours de réception. La mémoire de commande 13 est constituée d'autant de cellules de commande que de combinaisons binaires possibles pour une étiquette $ET_i$, soit $2^8 = 256$ dans le cas où une étiquette est codée par huit bits. A chacune des trames $TR_i$ en cours de réception est associée une cellule de commande respective $CC_i$ adressée par l'étiquette correspondante $ET_i$.

Une cellule $CC_i$ comprend quatre cases de mémoire C1 à C4 chargées individuellement sous la commande des signaux SC1 à SC4, respectivement. La case C1 mémorise un octet entrant Bq, tel que q est un entier compris entre 1 et 15; elle est chargée successivement avec les octets B1 à B15 délivrés par les sorties 123 du registre 12 à des entrées parallèles de données 132 de la mémoire 13.

Un octet Bq est chargé dans la case C1 sur un front montant du signal de commande SC1; le signal SC1 est représenté à la onzième ligne de la Fig. 5. Le signal SC1 produit par le circuit 5 (Fig. 1) est appliqué à une entrée 133 de la mémoire 13. Les fronts montants du signal SC1 correspondent à des fronts descendants du signal de rythme HO. Seule l'étiquette $ET_i$ d'un paquet en cours de réception $PQ_{ij}$ n'est pas chargée dans la case C1, les autres octets reçus B1 à B15 sont chargés sous la commande de fronts montants correspondants du signal SC1. Parallèlement à son chargement dans la cellule $CC_i$, un octet Bq

EP 0 296 928 B1

entrant d'un paquet PQ$_{ij}$ est écrit dans la mémoire de paquets 21 (Fig. 1) sous la commande également du signal SC1. Les octets B1 à B15 sont fournis à la mémoire 21 à travers les sorties 107 du circuit 1 connectées aux sorties 123 du registre 12.

Le compteur d'adresse d'écriture 14 fournit, via des sorties parallèles 141 connectées aux sorties 109 du circuit 1, des incréments d'adresse +1 à +15 ajoutés à l'adresse de paquet AP$_{ij}$ pour adresser octet par octet dans la mémoire 21 la case de mémoire, d'adresse AP$_{ij}$, destinée à stocker les octets B1 à B15 du paquet PQ$_{ij}$. Les incréments d'adresse fournis par le compteur 14 sont montrés à la troisième ligne, à partir du bas, de la Fig. 5.

Le compteur 14 est un compteur binaire modulo 16; la combinaison binaire 0 correspondant à un incrément +0 n'est pas utilisée. Des entrées 142 et 143 du compteur 14 sont connectées respectivement aux entrées 102 et 104 du circuit 1 et reçoivent les signaux DP et HO. L'entrée 142 est une entrée de remise à zéro; l'entrée 143 est une entrée d'horloge de comptage. Les incréments d'adresse fournis par les sorties 141 commutent sur des fronts montants du signal HO de telle sorte qu'ils sont stabilisés lorsqu'interviennent les fronts montants du signal SC1 commandant l'écriture des octets B1 à B15 dans la mémoire 21.

La case C2 de la cellule CC$_i$ contient le bit de réception de trame BRT$_i$ de la trame TR$_i$ en cours de réception. Le bit BRT$_i$ est écrit à un état "1" ou "0" fourni à une entrée 134 de la mémoire 13 par une sortie 151 de la bascule 15. Le bit BRT$_i$ est montré à la huitième ligne de la Fig. 5. Le bit BRT$_i$ est écrit, à l'état délivré à l'entrée 134, sous la commande du signal SC2 appliqué à une entrée 135 de la mémoire 13, parallèlement au chargement de l'octet B15 dans la case C1 ou dans la mémoire 21. Le signal SC2 est montré à la douzième ligne de la Fig. 5. Le bit BTR$_i$ à l'état "0" indique qu'une trame TR$_i$ est en cours de réception, c'est-à-dire qu'un drapeau d'ouverture DO a été détecté. Le signal de détection de drapeau d'ouverture DDO est montré à la sixième ligne de la Fig. 5.

Le signal DDO est à l'état "1" lorsque le drapeau DO du paquet PQ$_{i1}$ est détecté à des entrées parallèles 161 du circuit de détection de drapeaux de trame 16. Le signal DDO est fourni par une sortie 162 du circuit 16 à une entrée de mise à "0" 152 (R) de la bascule 15. Lorsque le drapeau DO du paquet PQ$_{i1}$ est détecté, la sortie 151 (Q) de la bascule 15, initialement à l'état "1", vient à l'état "0". Le bit BRT$_i$, initialement à l'état "1", est écrit sous la commande du signal SC2 à l'état "0" délivré par la bascule 15. Le bit BRT$_i$ est fourni par une sortie 136 de la mémoire 13 à une entrée de donnée 153(D) de la bascule 15. Une entrée d'horloge 154 (CK) de la bascule 15 reçoit le signal de commande SC5. Le signal SC5 est montré à la Fig. 5, à la cinquième ligne à partir du bas. L'état du bit BRT$_i$ est chargé dans la bascule 15 à chaque début de paquet, en réponse à un front montant d'une impulsion du signal SC5. Cette impulsion est synchrone avec le front descendant d'une impulsion du signal HO commandant le chargement d'une étiquette ET$_i$ dans le registre 11.

Lorsqu'un drapeau de fermeture de trame DF est détecté par le circuit 16 dans le paquet PQ$_{iJ}$, une sortie 163 du circuit 16 délivre le signal de détection de fin de trame DDF à l'état "1". Le signal DDF qui n'est pas synchrone du rythme octet est montré à la septième ligne de la Fig. 5. Le signal DDF est fourni à une entrée de mise à "1" 155(S) de la bascule 15. La sortie 151(Q) de la bascule 15 initialisée en début de paquet à l'état "0" est alors forcée à l'état "1". Cet état "1" est ensuite écrit dans la case C2 en fin de réception du paquet PQ$_{iJ}$, sous la commande du signal SC2. L'état du bit BRT$_i$ indique pour tout paquet ayant une étiquette ET$_i$ reçue dans le circuit 1, si une trame TR$_i$ est en cours de réception ou non.

Le circuit de détection de drapeaux 16 a pour fonction de détecter un drapeau DO ou DF dans un paquet en cours de réception. Il indique également si un paquet reçu est valide ou invalide.

Le circuit 16 a une entrée 164 reliée à la sortie 151(Q) de la bascule 15. Cette entrée 164 reçoit en début de réception de paquet, lorsque le signal SC5 vient à l'état "1", l'état du bit BRT$_i$ contenu dans la case C2 de la cellule adressée CC$_i$. Une sortie 165 du circuit 16 délivre un signal PV à l'état "1" lorsqu'un paquet reçu PQ$_i$ d'étiquette ET$_i$ est valide, et à l'état "0" lorsque le paquet reçu PQ$_i$ est invalide.

Pour décider si un paquet PQ$_i$ est valide ou invalide, le circuit 16 analyse l'état du bit BTR$_i$ fourni à l'entrée 164. Si le bit BTR$_i$ est à l'état "1" et qu'un drapeau d'ouverture DO est détecté par le circuit 16, le paquet PQ$_i$ est déclaré valide, PV = "1"; le paquet PQ$_i$ est le premier paquet PQ$_{i1}$ d'une trame TR$_i$. Si le bit BTR$_i$ est à l'état "1" et qu'aucun drapeau d'ouverture DO n'est détecté par le circuit 16 le paquet PQ$_i$ est déclaré invalide, PV = "0".

Le circuit 16 comprend des entrées parallèles 166 reliées à des sorties parallèles 137 de la mémoire de commande 13. Les sorties 137 fournissent l'octet de paquet chargé dans la case C1. A des entrées 167 et 168 du circuit 16 sont appliqués respectivement les signaux de commande SC6 et SC7; ces signaux sont montrés aux dixième et neuvième lignes de la Fig. 5. Le signal SC6 marque par un état "1" la présence d'un octet Bq aux entrées 161 du circuit 16. Le signal SC7 marque par un état "1" la présence d'un octet B1 aux entrées 161. Les signaux SC6 et SC7 indiquent respectivement pour un paquet PQ$_{ij}$ en cours de

8

réception les octets B1 à B15 pouvant contenir un drapeau de fermeture DF et l'octet B1 pouvant contenir un drapeau d'ouverture DO.

Le circuit 16 réalise, pour détecter un drapeau d'ouverture DO = "01111110" dans un paquet $PQ_{i1}$, une fonction logique exprimée par l'équation logique :

DDO = SC7. $BRT_i$. $\overline{bq_0}$. $bq_1$.$bq_2$.$bq_3$.$bq_4$.$bq_5$.$bq_6$.$\overline{bq_7}$ où $bq_0$ à $bq_7$ représentent les bits de l'octet Bq, du bit de poids faible au bit de poids fort, en cours de réception aux entrées 161 du circuit 16. Le signal SC7 n'autorise la prise en compte que de l'octet B1; le bit $BRT_i$ à l'état "1" est une condition nécessaire pour qu'un paquet en cours de réception $PQ_{ij}$ soit le premier paquet $PQ_{i1}$ de la trame $TR_i$, le bit $BRT_i$ ne chageant d'état qu'après la prise en compte du dernier octet B15 d'un paquet.

La détection du drapeau DF = "01111110" dans un paquet $PQ_{iJ}$ est plus complexe compte tenu du fait qu'un drapeau DF peut être contenu dans deux octets consécutifs du paquet $PQ_{iJ}$ ou deux octets de deux paquets consécutifs de la trame $TR_i$ ou encore l'un des autres cas de figure évoqués en relation avec la Fig. 3. Les différents cas de figure qui peuvent se produire sont montrés à la Fig. 6 pour deux octets consécutifs Bp et Bq d'un paquet $PQ_{iJ}$, où p et q sont des entiers consécutifs compris entre 1 et 15.

Le signal SC6 et le bit $BRT_i$ respectivement à l'état "1" et "0" sont deux conditions nécessaires à la détection d'un drapeau DF dans un paquet en cours de réception. La fonction logique réalisée par le circuit 16 pour détecter un drapeau DF = "01111110" est exprimée par l'équation logique :

$$
\begin{aligned}
DDF= SC6.\overline{BRT}_1.[ \ & \overline{bp}_1.bp_2.bp_3.bp_4.bp_5.bp_6.bp_7.\overline{bq}_0 \\
+ \ & \overline{bp}_2.bp_3.bp_4.bp_5.bp_6.bp_7.bq_0.\overline{bq}_1 \\
+ \ & \overline{bp}_3.bp_4.bp_5.bp_6.bp_7.bq_0.bq_1.\overline{bq}_2 \\
+ \ & \overline{bp}_4.bp_5.bp_6.bp_7.bq_0.bq_1.bq_2.\overline{bq}_3 \\
+ \ & \overline{bp}_5.bp_6.bp_7.bq_0.bq_1.bq_2.bq_3.\overline{bq}_4 \\
+ \ & \overline{bp}_6.bp_7.bq_0.bq_1.bq_2.bq_3.bq_4.\overline{bq}_5 \\
+ \ & \overline{bp}_7.bq_0.bq_1.bq_2.bq_3.bq_4.bq_5.\overline{bq}_6 \\
+ \ & \overline{bq}_0.bq_1.bq_2.bq_3.bq_4.bq_5.bq_6.\overline{bq}_7 \ ],
\end{aligned}
$$

où $bp_0$ à $bp_7$ et $bq_0$ à $bq_7$ correspondent respectivement aux huit bits des octets Bp et Bq, du bit de poids faible au bit de poids fort.

Le détection du drapeau de fermeture DF implique la nécessité de disposer à la fois de l'octet en cours de réception Bq et de l'octet précédent Bp. L'octet Bp doit donc être mémorisé lors de sa réception jusqu'à l'arrivée de l'octet Bq, afin de disposer dans le circuit 1 des deux octets Bp et Bq pendant un intervalle temporel déterminé $\Delta t$. La case de mémoire C1 dans une cellule de commande $CC_i$ réalise cette fonction de mémorisation de l'octet précédent Bp. Un intervalle temporel $\Delta t$ pendant lequel les deux octets consécutifs B2 et B3 d'un paquet $PQ_{ij}$ sont présents respectivement aux entrées 166 et 161 est montré en haut de la Fig. 5. Les octets délivrés par les sorties 123 du registre 12 sont montrés à la cinquième ligne de la Fig. 5; ceux délivrés par les sorties 137 de la mémoire 13 sont montrés entre la cinquième et la sixième ligne de la Fig. 5.

Les adresses $AP_{ij}$ présentes aux entrées 105 du circuit 1 sont fournies directement aux sorties 108 du circuit 1 vers les entrées de données 221 de la mémoire de chaîne d'adresses de trame de paquets 22 (Fig. 1) et à des entrées parallèles 138 de la mémoire de commande 13. Lorsqu'une adresse $AP_{ij}$ est l'adresse $AP_{i1}$ d'un premier paquet de trame $PQ_{i1}$, cette adresse $AP_{ij}$ = $AP_{i1}$ est chargée dans la case de mémoire C3 de la cellule $CC_i$ sous la commande du signal SC3 à l'état "1" fourni à une entrée 139 de la mémoire de commande 13. Le signal SC3 est montré à la sixième ligne, à partir du bas, de la Fig. 5. Le signal SC3 ne délivre une impulsion à l'état "1" que si un drapeau d'ouverture DO est détecté, donc uniquement pour le premier paquet $PQ_{i1}$ d'une trame $TR_i$. L'adresse $AP_{i1}$ chargée dans la case de mémoire C3 est fournie aux sorties 102a du circuit 1 vers les entrées 301 du circuit 3 (Fig. 1).

L'adresse $AP_{i1}$ est également chargée dans la case de mémoire C4 de la cellule $CC_i$, de même que toutes les adresses suivantes successives $AP_{i2}$, $AP_{i3}$, ... $AP_{iJ}$. Le chargement des adresses $AP_{i1}$ à $AP_{iJ}$ dans la case de mémoire C4 est commandé par le signal SC4 fourni à une entrée 131a de la mémoire de commande 13. Le signal SC4 est montré à la septième ligne, en partant du bas, de la Fig. 5. Une adresse $AP_{ij}$ est chargée dans la case de mémoire C4 sur un front montant d'une impulsion à l'état "1" du signal SC4. Cette impulsion intervient parallèlement au chargement de l'octet B2 du paquet en cours de réception $PQ_{ij}$ dans la mémoire de paquets 21. Une adresse $AP_{ij}$ chargée dans la case de mémoire C4 est délivrée via les sorties 101a du circuit 1 aux entrées d'adresse 222 de la mémoire de chaînes d'adresses 22. Les adresses $AP_{i1}$, $AP_{i,j-l}$, $AP_{ij}$, et $AP_{i,J-1}$ délivrées aux entrées d'adresse 222 sont montrées à l'avant dernière ligne de la Fig. 5.

Le signal de commande SC8, montré à la dernière ligne de la Fig. 5, commande l'écriture des adresses $AP_{i2}$,... $AP_{ij}$,... $AP_{iJ}$ dans des cases de la mémoire 22, respectivement d'adresses $AP_{i1}$,...$AP_{i,j-1}$,... $AP_{i,J-1}$. L'écriture des adresses $AP_{i2}$ à $AP_{i,J-1}$ de la mémoire 22 intervient sur des fronts montants d'impulsions d'écriture à l'état "1" du signal SC8. Le signal SC8 ne comporte aucune impulsion d'écriture pendant la réception du premier paquet $PQ_{i1}$ d'une trame $TR_i$. Une impulsion d'écriture du signal SC8 pendant la réception d'un paquet $PQ_{ij}$ de la trame $TR_i$ intervient antérieurement au chargement de l'adresse $AP_{ij}$ dans la case C4 de la cellule $CC_i$ de telle sorte que l'adresse présente aux entrées d'adresse 222 de la mémoire 22 est alors l'adresse $AP_{i,j-1}$. Aux entrées de donnée 221 de la mémoire 22 est présentée l'adresse $AP_{ij}$. Lorsque survient l'impulsion d'écriture du signal SC8, l'adresse $AP_{ij}$ est écrite dans la case d'adresse $AP_{i,j-1}$ de la mémoire 22.

Une porte ET à trois entrées 13ET est utilisée dans le circuit 1 afin de produire le signal d'accusé de réception d'adresse de paquet RAP fourni via la sortie 106 du circuit 1 à l'entrée 402 du circuit de mémorisation et de gestion d'adresses de mémoire 4 (Fig. 1). Une première entrée de la porte 13ET reçoit à travers un inverseur 1IN le signal d'horloge HO. Des seconde et troisième entrées de la porte 13ET reçoivent respectivement le signal PV délivré par la sortie 165 du circuit 13 et le signal de commande SC7. Le signal RAP est utilisé dans le circuit 4 pour la commande en lecture d'un registre d'adresse de type FIFO dans lequel sont stockées toutes les adresses $AP_{ij}$ des cases de mémoire disponibles dans la mémoire 2, en attente d'être fournies au circuit 1.

Une réalisation préférée du circuit de mémorisation et de gestion d'adresses de mémoire 4 est montré à la Fig. 7. Elle concerne la gestion dynamique de la mémoire de paquets 21 adressée par des adresses à n bits et contenant N cases de mémoire de paquet, où N est tel que $N \leq 2^n$.

Le circuit 4 comprend essentiellement un circuit d'initialisation 41, un compteur binaire modulo-N 42, et un registre d'adresses disponibles de mémoire 43.

Le circuit 41 a pour fonction de produire à la mise en opération de l'équipement selon l'invention, des signaux de commande SD1 et SD2 qui sont fournis au compteur 42. Le signal SD1 est fourni à une entrée de remise à zéro 421 du compteur 42 et commande l'initialisation et l'incrémentation du compteur 42 à partir de la valeur 0. Le signal SD2 signale la fin d'un premier cycle de comptage complet du compteur 42 suivant la mise en opération de l'équipment selon l'invention. Le signal SD2 est fourni à une entrée de commande de chargement 422 du compteur 42. Le circuit 41 comprend des entrées parallèles 413 recevant les adresses à n bits $AP_{ij}$ fournies par des sorties parallèles 423 du compteur 42 reliées aux sorties 401 du circuit 41, afin de détecter une adresse maximale égale à N-1 délivrée par le compteur 42 à la fin du premier cycle de comptage.

Des entrées parallèles 424 du compteur 42 reçoivent la valeur à charger dans le compteur 42 lorsque celui-ci fonctionne en registre tampon. A condition que le signal SD2 appliqué à l'entrée de commande de chargement 422 du compteur 42 soit à l'état adéquat, la valeur appliquée aux entrées 424 est chargée dans le compteur 42 sur le front montant du signal DP appliqué à une entrée d'horloge 425 du compteur 42, via l'entrée 402 du circuit 4. La valeur chargée est fournie par les sorties parallèles 423 du compteur 42 fonctionnant en registre.

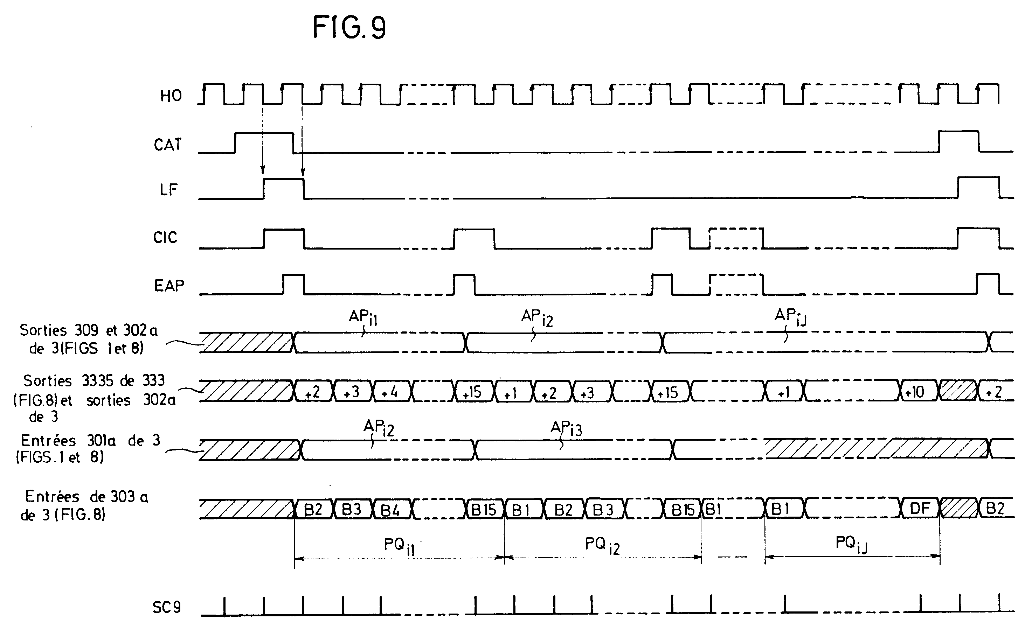

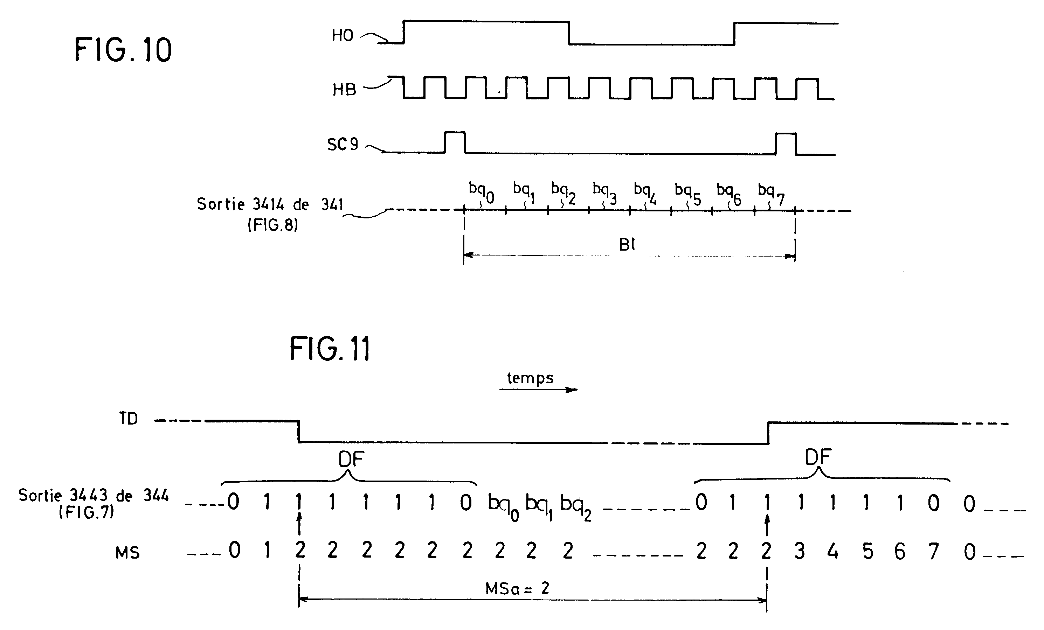

Le registre 43 est un registre de type FIFO; il reçoit par des entrées parallèles 431 via l'entrée 404, les adresses à n bits $AP_{ij}$ de cases de mémoire disponibles. Le signal de commande d'écriture EAP reçu à l'entrée 405 du circuit 4 est fourni à une première entrée d'une porte ET à deux entrées 44. Une bascule 45 de type D reçoit respectivement à une entrée d'horloge CK et à une entrée de mise à l'état "1" S, les signaux FTT et LF fournis par le comparateur 345 du circuit 33 et par la bascule 334 du circuit 34 (Fig. 8).

Une entrée de donnée D de la bascule 45 reçoit un niveau logique "0". La bascule 45 fournit un signal de validation du signal EAP par une sortie Q. Ce signal de validation est appliqué à une seconde entrée de la porte ET 44. Une sortie de la porte ET 44 est reliée à une entrée de commande d'écriture 432 du registre 43. Le registre 43 mémorise par ordre chronologique d'arrivée les adresses $AP_{ij}$ de cases de mémoire disponibles fournies par le circuit 3. La première adresse $AP_{ij}$ mémorisée dans le registre 43 est délivrée par des sorties parallèles 433 du registre 43 aux entrées 424 du compteur 42 lorsque le signal RAP à l'état "1" est délivré, via l'entrée 403 du circuit 4, à une entrée de commande de lecture 434 du registre 43.

A la mise en opération du dispositif selon l'invention, les N cases de mémoire de paquet et de mots d'adresse des mémoires 21 et 22 sont disponibles. Le compteur 42 est initialisé à 0 par le signal SD1. Le signal SD2 est inactif. Le compteur 42 est incrémenté d'une unité sur chaque front montant du signal de début de paquet DP; il délivre ainsi N adresses $AP_{ij}$, et des trames $TR_i$ sont chargées dans la mémoire 21. Parallèlement, le registre 43 reçoit du circuit 3 des adresses $AP_{ij}$ de cases de mémoire qui sont libérées par des transmissions de trames de paquets reconstituées dans le support MT. Lorsque le circuit d'initialisation 41 détecte l'adresse maximale égale à N-1 délivrée par le compteur 42, le signal de commande de chargement SD2 devient actif. Le compteur 42 fonctionne alors en registre-tampon. Les adresses $AP_{ij}$ délivrées par les sorties 433 du registre FIFO 43 et correspondant à des cases de mémoire successivement libérées sont chargées dans le compteur 42 par les entrées 424 et transmises sous la commande du signal DP par les sorties 423 vers le circuit 1.

Une réalisation simplifiée du circuit 4 peut ne comprendre qu'un compteur binaire modulo N. Le circuit 4 n'est pas alors connecté au circuit 3. Le compteur est incrémenté par le signal DP et délivre cycliquement les adresses $AP_{ij}$, de $AP_{ij} = 0$ à $AP_{ij} = N-1$. Cette réalisation simplifiée du circuit 4 conduit toutefois à la nécessité d'une mémoire-tampon 21 de capacité plus importante puisqu'il est nécessaire d'éviter d'adresser en écriture une case de mémoire qui contient un paquet antérieur encore non lu, et donc d'éviter toute perte d'information.

En référence maintenant à la Fig. 8, le circuit 3 comprend un registre d'adresse de premier paquet de trame 31, un registre d'étiquette de trame 32, un circuit d'adressage de mémoire 33, et un circuit de transmission de trame 34.

Les registres 31 et 32 sont des registres de type FIFO; ils mémorisent respectivement les adresses $AP_{i1}$ et les étiquettes $ET_i$ transmises parallèlement par le circuit 1 aux entrées 301 et 303 du circuit 3. Une adresse $AP_{i1}$ transmise par le circuit 1 est appliquée via les entrées 301 du circuit 1 à des entrées parallèles 311 du registre 31; une étiquette $ET_i$ transmise par le circuit 1 est appliquée via les entrées 303 du circuit 3 à des entrées parallèles 321 du registre 32. Le signal DDF est appliqué via l'entrée 302 du circuit 1 à des entrées de commande d'écriture 312 et 322 respectivement des registres 31 et 32 et commande par un état "1" l'écriture des adresses $AP_{i1}$ et étiquettes $ET_i$ dans les registres 31 et 32. Une adresse $AP_{i1}$ et une étiquette $ET_i$ stockées en file d'attente dans les registres 31 et 32 sont délivrées en parallèle par les registres 31 et 32 sous la commande d'un signal de commande de lecture LF délivré par le circuit d'adressage de mémoire 33 et appliqué à des entrées 313 et 323 respectivement des registres 31 et 32. Lorsque le signal LF vient à un état "1", une adresse $AP_{i1}$ et une étiquette $ET_i$ sont présentées respectivement à des sorties parallèles 314 du registre 31 et à des sorties parallèles 324 du registre 32. Une étiquette $ET_i$ délivrée par les sorties 324 du registre 32 est transmise vers le support MT via les sorties 308 du circuit 3. Une adresse $AP_{i1}$ délivrée par les sorties 314 est fournie au circuit 33. Par une sortie 315, le registre 31 délivre un signal d'état de file d'attente FNV à un état "0" lorsque le registre 31 est vide, et à un état "1" dans le cas contraire. Le signal FNV est appliqué à une première entrée d'une porte ET, 333ET, incluse dans le circuit 33.

Le circuit d'adressage de mémoire 33 comprend essentiellement un aiguilleur d'adresse 331, un registre-tampon d'adresse 332, un compteur d'adresse de lecture 333, et une bascule de commande 334.

L'aiguilleur 331 sous la forme d'un multiplexeur permet d'aiguiller pour la lecture du premier paquet $PQ_{i1}$ d'une trame $TR_i$ stockée dans la mémoire 21, l'adresse $AP_{i1}$ fournie par les sorties 314 du registre 31 vers les sorties d'adresse 309 et 302a du circuit 3. Pour la lecture des paquets suivants $PQ_{i2}$ à $PQ_{iJ}$, l'aiguilleur 331 aiguille vers les sorties d'adresse 309 et 302a respectivement les adresses $AP_{i2}$ à $AP_{iJ}$ délivrées aux entrées 301a du circuit 3 par la mémoire 22 au fur et à mesure de la lecture des paquets de la trame $TR_i$.

L'aiguilleur 331 reçoit l'adresse $AP_{i1}$ fournie par les sorties 314 du registre 31 à des entrées parallèles 3311 et les adresses suivantes $AP_{i2}$ à $AP_{iJ}$ délivrées par la mémoire 22 à d'autres entrées parallèles 3312, reliées aux entrées 301a du circuit 3. Une entrée de sélection 3313 de l'aiguilleur 331 reçoit le signal LF qui est fourni par un sortie 3341 (Q) de la bascule de commande 334. Un état "1" du signal LF commande dans l'aiguilleur 331 la connexion des entrées 3311 à des sorties parallèles 3314 de l'aiguilleur 331; un état "0" du signal LF commande la connexion des entrées 3312 aux sorties 3314. Les sorties 3314 de l'aiguilleur 331 sont reliées à des entrées parallèles 3321 du registre-tampon d'adresse 332 et aux sorties 304a du circuit 3 reliées aux entrées 404 du circuit de mémorisation et de gestion d'adresses de mémoire 4. Le chargement d'une adresse $AP_{ij}$ dans le registre-tampon 332 et son écriture dans le registre FIFO 43 du circuit 4 (Fig. 7) sont effectués parallèlement sous la commande d'un état "1" du signal EAP produit par une porte ET, 331ET, et appliqué à une entrée de commande de chargement 3322 du registre-tampon 332 et, via la sortie 305a du circuit 3, à l'entrée 405 du circuit 4. L'adresse $AP_{ij}$ chargée dans le registre-tampon 332 est fournie par des sorties parallèles 3323 du registre-tampon 332 aux entrées d'adresse 224 de la mémoire 22 et aux entrées d'adresse 214 de la mémoire 21, respectivement via les sorties 309 et 302a du circuit 3.

La porte ET 331ET reçoit respectivement à une première entrée un signal de commande d'initialisation de compteur CIC et à une seconde entrée le signal d'horloge d'octet HO fourni via l'entrée 304 du circuit 3. Le signal CIC est produit par une porte OU à deux entrées 331OU et est délivré également à une entrée de commande de chargement 3331 du compteur d'adresse de lecture 333.

Le compteur d'adresse de lecture 333 a pour fonction de produire les incréments d'adresse +1 à +15 à ajouter à une adresse $AP_{ij}$ afin d'adresser, octet par octet dans la mémoire de paquets 21, les paquets $PQ_{ij}$ de la trame $TR_i$ en cours de lecture. Pour l'adressage du premier paquet $PQ_{i1}$ d'une trame $TR_i$, le compteur 333 est initialisé à la valeur 2 afin de ne pas lire dans la mémoire 22 l'octet B1 du paquet $PQ_{i1}$. L'octet B1 est un drapeau d'ouverture DO et il est mémorisé dans la mémoire 21 à l'adresse $AP_{i1}$ + 1. Pour l'adressage des paquets suivants $PQ_{i2}$ à $PQ_{iJ}$, le compteur 333 est initialisé à la valeur 1 afin de lire l'ensemble des octets B1 à B15 de chacun des paquets.

Le compteur 333 est un compteur binaire modulo L = 16 de type à valeur de début de comptage initialisable. Le compteur 333 est initialisé aux valeurs 1 et 2, sous la commande du signal CIC appliqué à l'entrée de commande de chargement 3331, lorsqu'un état "1" est appliqué respectivement à des entrées d'initialisation 3332 et 3333 du compteur 333. Une entrée d'horloge de comptage 3334 du compteur 333 reçoit le signal de rythme HO. Des sorties parallèles 3335 du compteur 333 délivrent les incréments d'adresse +2 à +15 pour la lecture dans la mémoire 21 du paquet $PQ_{i1}$, et +1 à +15 pour la lecture de chacun des paquets suivants $PQ_{i2}$ à $PQ_{iJ}$. Les incréments d'adresse délivrés par les sorties 3335 sont délivrés aux entrées 214 de la mémoire 21 via les sorties 302a du circuit 3, parallèlement aux adresses $AP_{ij}$ fournies par les sorties 3323 du registre-tampon 332.

La bascule de commande 334 est une bascule de type D. Cette bascule 334 reçoit à une entrée d'horloge 3342 (CK) le signal d'horloge complémentaire

$$\overline{\overline{HO}}$$

produit par un inverseur logique 33IN recevant en entrée le signal HO. Une entrée de donnée 3343 (D) de la bascule 334 reçoit un signal de commande d'adressage de trame CAT délivré par la porte ET à deux entrées 332ET. Une sortie inverse 3344 ($\overline{Q}$) de la bascule 334 délivre le signal

$$\overline{\overline{LF}}$$

complémentaire au signal LF. Le signal LF fourni par la sortie 3341 (Q) de la bascule 334 est appliqué à l'entrée 3333 d'initialisation à 2 du compteur 333, à une première entrée de la porte 331OU, ainsi qu'aux entrées 3313, 313 et 323 respectivement de l'aiguilleur 331, du registre 331 et registre 32. Le signal

$$\overline{\overline{LF}}$$

fourni par la sortie 3344 ($\overline{Q}$) de la bascule 334 est appliqué à une première entrée d'une porte ET à cinq entrées 332ET ayant quatre autres entrées reliées aux sorties 3335 du compteur d'adresse de lecture 333. La porte 332ET a pour fonction de détecter l'incrément +15 lorsqu'il est délivré par les sorties 3335 du compteur 333. Une sortie de la porte 332ET est reliée à l'entrée 3332 d'initialisation à 1 du compteur 333 et à une seconde entrée de la porte 331OU produisant le signal de commande d'initialisation CIC.

Un cycle d'adressage en lecture des paquets $PQ_{i1}$ à $PQ_{iJ}$ d'une trame $TR_i$ mémorisée dans la mémoire 21 est montrée à la Fig. 9.

Le signal de commande d'adressage de trame CAT est montré à la seconde ligne de la Fig. 9; ce signal commande lorsqu'il vient à l'état "1" le déclenchement de la lecture successive de tous les paquets

$PQ_{i1}$ à $PQ_{iJ}$ d'une trame $TR_i$. Le signal CAT est produit par la porte ET à deux entrées 333ET (Fig. 8). La porte 333ET reçoit à la première entrée le signal FNV fourni par le registre 31, et à une seconde entrée un signal d'indication de fin de transmission de trame FTT produit dans le circuit de transmission de trame 34. Un état "1" du signal CAT indique d'une part qu'au moins une trame complète de paquet est écrite dans la mémoire 21 et attend d'être lue (FNV = "1") et d'autre part que le circuit 34 est disponible pour la transmission dans le support MT d'une nouvelle trame de paquets à lire dans la mémoire 21 (FTT = "1"). L'état "1" du signal CAT est écrit dans la bascule 334 sur un front descendant du signal d'horloge HO et détermine le signal LF à l'état "1". Le signal LF est montré à la troisième ligne de la Fig. 9. L'état "1" du signal LF commande la transmission d'une adresse $AP_{i1}$ du registre FIFO 31 vers les entrées 3321 du registre-tampon 332, et d'une étiquette $ET_i$ correspondante du registre FIFO 32 vers les sorties 308 du circuit 3. Parallèlement, le signal CIC, montré à la quatrième ligne de la Fig. 9, dépendant du signal LF vient à l'état "1". Le signal EAP = CIC.HO, montré à la cinquième ligne de la Fig. 9, vient à l'état "1" ultérieurement au signal CIC, sur un front montant du signal HO commandant également la prise en compte à l'entrée 3333 d'initialisation à 2 du compteur 333 de l'état "1" du signal CIC et consécutivement l'initialisation à 2 du compteur 333. Le front montant à l'état "1" du signal EAP commande le chargement de l'adresse $AP_{i1}$ dans le registre-tampon 332, comme montré à la sixième ligne de la Fig. 9. L'adresse $AP_{i1}$, via les sorties 309 du circuit 3, est appliquée aux entrées d'adresse 224 de la mémoire 22, et, via les sorties 302a du circuit 3, aux entrées d'adresse 214 de la mémoire 21 parallèlement à l'incrément +2 fourni par le compteur 333. Consécutivement à leur adressage en lecture, comme montré aux huitième et neuvième lignes de la Fig. 9, les mémoires 22 et 21 délivrent respectivement l'adresse $AP_{i2}$ aux entrées 301a du circuit 3 et, via les entrées 303a du circuit 3, l'octet B2 du paquet $PQ_{i1}$ au circuit de transmission de trame 34.

De manière générale, les lectures des mémoires 22 et 21 par le circuit 3 sont commandées respectivement par des fronts descendants du signal de commande d'écriture/lecture SC8 et par des fronts descendants du signal de commande d'écriture/lecture SC1, leurs écritures respectives par le circuit 1 étant commandées par des fronts montants de ces mêmes signaux (Figs. 1 et 5).

Le signal FTT fourni par le circuit de transmission de trame 34 passe à l'état "0" à la suite de la réception de l'octet B2 du paquet $PQ_{i1}$ par le circuit 34, et consécutivement, le signal CAT = FTT.FNV à l'état "0". L'état "0" du signal CAT est pris en compte dans la bascule 334 suite à un front descendant suivant du signal HO. Les signaux LF, CIC et EAP sont alors à l'état "0". Le compteur d'adresse de lecture 333 est incrémenté d'une unité à partir de 2, en réponse à chaque front montant suivant du signal HO, jusqu'à atteindre 15.

Les incréments successifs délivrés par le compteur 333 sont montrés à la septième ligne de la Fig. 9. Aux entrées d'adresse en lecture 214 de la mémoire 21 sont ainsi appliquées successivement les adresses $AP_{i1}+2$, $AP_{i1}+3$,... $AP_{i1}+15$ et le circuit 34 reçoit les octets B2, B3, ...B15 du paquet $PQ_{i1}$ via les entrées 303a du circuit 3.

Lorsque le compteur 333 atteint la valeur 15, le signal LF étant à l'état "0", la porte 332ET délivre un état "1" à l'entrée 3332 d'initialisation à 1 du compteur 333 et à la seconde entrée de la porte 331OU. Les signaux CIC et EAP = CIC.HO viennent à l'état "1". Le registre-tampon 332 est chargé sous la commande du signal EAP = "1" par l'adresse $AP_{i2}$ présente aux entrées 301a du circuit 3 et appliquée, via l'aiguilleur d'adresse 331 (LF =0), aux entrées 3321 du registre-tampon 332. Le compteur 333 est initialisé à 1 sur un front montant du signal HO suivant l'état "1" appliqué aux entrées 3331 et 3332 du compteur 333. Le circuit 3 lit ainsi le paquet $PQ_{i2}$ à partir de l'octet B1. Les paquets suivants $PQ_{i3}$ à $PQ_{i,J-1}$ sont lus de manière analogue au paquet $PQ_{i2}$. Le dernier paquet $PQ_{iJ}$ de la trame $TR_i$ comprend un drapeau de fermeture DF qui est détecté par le circuit 34. A la Fig. 9 le drapeau DF est montré à titre d'exemple comme étant l'octet B10 du paquet $PQ_{iJ}$. Lorsque le drapeau DF est détecté, le signal FTT passe à l'état "1"; consécutivement le signal CAT passe à l'état "1" à condition toutefois que les registres 31 et 32 ne soient pas vides (FNV = "1"). L'état "1" du signal CAT est écrit dans la bascule 334 et déclenche la lecture successive des paquets d'une autre trame.

Le circuit de transmission de trame 34, montré à la Fig. 8, comprend essentiellement un registre à chargement parallèle et à sortie série 341, un registre à décalage 342, un aiguilleur 343, un multiplexeur 344, un comparateur de mots binaires 345, un compteur binaire 346, et une bascule 347.

Des entrées parallèles de donnée 3411 du registre parallèle-série 341 reçoivent les octets de paquets transmis par la mémoire 21, via les entrées 303a du circuit 3. Une entrée d'horloge 3412 du registre 341 est reliée à l'entrée 305 du circuit 3 et reçoit le signal de rythme de transmission de bit HB. Le signal de commande SC9, montré à la dernière ligne de la Fig. 9, est appliqué à une entrée de commande de chargement 3413 du registre 341. Le signal SC9 est un signal impulsionnel périodique de même période que le signal d'horloge HO, mais retardé par rapport à celui-ci d'une période du signal HB. Un octet Bq

13

d'un paquet PQ$_{ij}$ présenté aux entrées 3411 du registre 341 est chargé dans le registre 341 lorsqu'intervient une impulsion à l'état "1" du signal SC9. Les bits bq$_0$ à bq$_7$ de l'octet chargé Bq sont ensuite délivrés successivement par une sortie série 3414 du registre 341, au rythme du signal HB, à une entrée de donnée 3421 du registre à décalage 342. Les signaux HO, HB, et SC9, ainsi que les bits bq$_0$ à bq$_7$ transmis par la sortie série 3414 du registre 341, sont montrés à la Fig. 10.

Le registre à décalage 342 a une capacité de un octet. L'octet Bq transmis bit par bit par le registre parallèle-série 341 à l'entrée 3421 est chargé au rythme du signal HB dans le registre à décalage 342. Le signal HB est fourni à une entrée de commande de décalage 3422 du registre 342 par une sortie de 3431 de l'aiguilleur 343 lorsqu' un état "0" est appliqué à une entrée de sélection 3432 de l'aiguilleur 343. L'aiguilleur 343 reçoit le signal HB à une entrée 3433 via l'entrée 305 du circuit 3. L'octet chargé dans le registre 342 est fourni par des sorties parallèles 3423 du registre 342 à des entrées parallèles 3451 et 3441 du comparateur 345 et du multiplexeur 344. Une entrée de commande de chargement parallèle 3424 reçoit le signal de commande SC10. Le signal SC10 est un signal de commande d'initialisation; il est appliqué également à une entrée de remise à zéro 3461 du compteur 346. A la mise sous tension, le signal SC10 présente une brève impulsion à l'état "1" qui commande la mise à zéro du compteur 346 et le chargement dans le registre 342 de la combinaison binaire "01111110" correspondant à un drapeau de fermeture DF. Cette combinaison binaire "01111110" = DF est mémorisée dans une mémoire morte sous forme cablée et est appliquée à des entrées de chargement parallèle 3425 du registre 342.

Un bit parmi les huit appliqués aux entrées 3441 du multiplexeur 344 est sélectionné par un mot binaire de sélection de bit MS, ayant trois bits, appliqués à des entrées de sélection 3442 du multiplexeur 344. Le bit sélecté par le mot MS est transmis par une sortie 3443 du multiplexeur 344 dans le support MT, via la sortie 306 du circuit 3.

Le comparateur 345 a pour fonction de détecter le drapeau de fermeture DF d'une trame en cours de transmission. Le comparateur 345 reçoit à des entrées parallèles 3452 la combinaison binaire "01111110" = DF mémorisée sous forme cablée. Par une sortie 3453, le comparateur 343 fournit le signal de fin de transmission de trame FTT. Le signal FTT vient à l'état "1" lorsqu'un drapeau de fermeture DF = "01111110" est fourni par les sorties parallèles 3423 du registre 342. Le signal FTT est fourni au circuit d'adressage de mémoire 33 et à une entrée d'horloge 3471 (CK) de la bascule 347.

La bascule 347 est une bascule de type D. Une entrée de donnée 3472 (D) de la bascule 347 est cablée à l'état "1". Une entrée de remise à zéro 3473(R) de la bascule 347 est connectée à une sortie d'une porte ET, 34ET, ayant deux entrées recevant respectivement les signaux SC9 et LF. La bascule 347 délivre un signal de commande de transmission de drapeau TD par une sortie 3474 (Q).

L'aiguilleur 343 a pour fonction d'aiguiller le signal de rythme HB vers l'entrée d'horloge 3422 du registre à décalage 342 ou vers une entrée d'horloge 3462 du compteur 346. Une sortie 3434 de l'aiguilleur 343 est reliée à l'entrée d'horloge 3462 du compteur 346 et fournit à celle-ci le signal HB lorsque l'entrée de sélection 3432 de l'aiguilleur 343 recoit le signal TD à l'état "1".

Le compteur 346 est un compteur modulo 8; il délivre par des sorties parallèles 3463 le mot de sélection de bit MS fourni aux entrées de sélection 3442 du multiplexeur 344.

A la fin de la transmission d'une trame TR$_i$ dans le support MT, le registre à décalage 342 contient le drapeau DF = "01111110". Le drapeau DF fourni par les sorties 3423 du registre 342 est appliqué aux entrées 3451 du comparateur 345 et le signal FTT précédemment à l'état "0" vient à l'état "1". Le passage à l'état "1" du signal FTT commande l'écriture dans la bascule 347 de l'état "1" appliqué à l'entrée de donnée 3472(D). La sortie 3474(Q) de la bascule 347 délivre alors à l'entrée de sélection 3432 de l'aiguilleur 343 le signal TD à l'état "1". Cet état "1" commande l'aiguillage du signal HB de l'entrée 3433 vers l'entrée d'horloge 3462 du compteur 346 qui fournit alors cycliquement au rythme du signal HB des mots MS ayant des valeurs successives de 0 à 7. Les mots MS sélectionnent individuellement et successivement chacun des bits du drapeau DF fourni aux entrées 3441 du multiplexeur 344 par le registre à décalage 342. Le drapeau DF est transmis sous forme série dans le support MT par la sortie 3443 du multiplexeur 344. Dans le cas où les registres FIFO 31 et 32 sont vides (FNV = "0"), c'est-à-dire lorsqu'aucune trame complète de paquets n'est stockée dans la mémoire 21, le drapeau DF est transmis continuellement dans le support MT jusqu'à ce que la transmission d'une trame soit possible.

Lorsque le circuit 33 déclenche la lecture d'une trame de paquets TR$_i$ dans la mémoire de paquets 21, le signal LF appliqué à la seconde entrée de la porte 34ET vient à l'état "1" et ouvre la porte 34ET. La bascule 347 est remise à zéro lorsque survient une impulsion à l'état "1" du signal SC9, après le passage à l'état "1" du signal LF. Le signal TD à l'état "0" commande l'aiguillage du signal d'horloge HB, dans l'aiguilleur 343, vers l'entrée d'horloge 3422 du registre à décalage 342. Le compteur 346 ne reçoit plus le signal HB précédemment fourni par l'aiguilleur 343, le comptage etant suspendu. Le compteur 346 fournit ainsi un mot MSa qui sélectionne l'une des entrées 3441 du multiplexeur 344 pour toute la durée de la transmission de la trame TR$_i$ dans le support MT. Au rythme du signal HB, chacun des bits chargés dans le registre à décalage 342 est transmis à l'entrée sélectée 3441 du multiplexeur 344 par la sortie correspondante 3423 du registre 342.

Lorsque le drapeau DF de la trame TR$_i$ en cours de transmission dans le support MT est détecté par le comparateur 345, le signal TD passe à l'état "1". Le signal HB est aiguillé à l'entrée d'horloge 3462 du compteur 346. Le décalage est interrompu dans le registre 342 et le comptage reprend dans le compteur 346 à partir du mot MSa.

Comme montré à la Fig. 11, les drapeaux DF sont transmis intégralement dans le support MT par la sortie 3443 du multiplexeur 344; ils ne sont pas tronqués lors des transitions du signal TD.

Une transition de l'état "1" à l'état "0" du signal TD précédant le début de la transmission d'une trame TR$_i$ dans le support MT est montrée à la première ligne, à gauche, de la Fig. 11. Cette transition intervient, par exemple, à la transmission par la sortie 3443 du multiplexeur 344 d'un troisième bit, égal à "1", d'un drapeau DF, par rapport à un premier bit égal à "0" de poids faible. Le mot MS a alors pour valeur 2, d'où MSa = 2. Une portion de poids faible "011" du drapeau DF a été transmise dans le support MT avant la transition à l'état "0" du signal TD. La portion restante de poids fort "11110" à transmettre du drapeau DF est reçue à l'entrée 3441, du multiplexeur 344, sélectée par le mot MSa = 2, au rythme du signal HB commandant le décalage dans le registre 342. La transmission de bits bq$_0$, bq$_1$, bq$_2$ ... de la trame TR$_i$ suit la transmission dans le support MT de la portion "11110" du drapeau DF. En fin de transmission de la trame TR$_i$, le drapeau DF est détecté par le comparateur 345 à la fin de son chargement dans le registre à décalage 342 et le signal TD vient à l'état "1". Une portion de poids faible "011" du drapeau DF a déjà été transmise dans le support MT avant la transition à l'état "1" du signal TD. Le compteur 346 reprend le comptage à partir du mot MSa = 2 et délivre successivement les mots MS = 3, 4, 5, 6, 7 qui sélectionnent des entrées suivantes 3441 du multiplexeur 344. La portion restante de poids fort "11110" du drapeau DF est ainsi transmise dans le support MT.

## Revendications

**1.** Equipement recevant en provenance d'un même support de transmission des paquets entrants de longueur fixe appartenant à des trames entrelacées d'origines diverses et constituées d'un nombre quelconque de bits pour reconstituer des trames multiplexées,

les paquets entrants comprenant des mots (octets) en nombre prédéterminé (L = 16), les paquets entrants d'une trame comprenant chacun un premier mot (B0) constituant une étiquette (ET$_i$) identifiant la trame (TR$_i$), le second mot (B1) dans le premier paquet entrant (PQ$_{i1}$) de chacune des trames étant identique à un motif de début de trame prédéterminé (DO = "01111110"), et le dernier paquet entrant (PQ$_{iJ}$) dans chacune des trames contenant un motif de fin de trame prédéterminé (DF = "01111110"),

ledit équipement comprenant :

une première mémoire (21) comprenant des première cases pour mémoriser momentanément tous les paquets entrants (PQ$_{i1}$ à PQ$_{iJ}$) de chacune (TR$_i$) des trames entrelacées,

des moyens (4) pour établir des adresses de premières cases destinées à mémoriser des paquets entrants,

une seconde mémoire (22) ayant un nombre de secondes cases au moins égal au nombre de premières cases pour mémoriser des adresses (AP$_{ij}$) établies de premières cases ayant mémorisé des paquets entrants,

une troisième mémoire (13) ayant des cellules (CC) respectivement assignées aux trames entrelacées (TR$_i$), une cellule assignée à une trame (TR$_i$) mémorisant l'adresse établie (AP$_{ij}$) du paquet entrant le plus récent de la trame, et

une quatrième mémoire (31, 32) pour mémoriser les adresses (AP$_{i1}$) des premières cases de la première mémoire (21) ayant mémorisé des premiers paquets (PQ$_{i1}$)'

caractérisé en ce qu'il comprend :

des premiers moyens (11) pour détecter les étiquettes (ET$_i$) dans les paquets entrants,

des seconds moyens (15, 16) pour détecter les motifs de début (DO) et les motifs de fin (DF) dans les paquets entrants,

la cellule (CC$_i$) de la troisième mémoire (13) assignée à une trame (TR$_i$) étant adressée en écriture par l'étiquette (ET$_i$) détectée dans chacun des paquets entrants de ladite trame, pour mémoriser une première adresse établie (AP$_{i1}$) d'une première case dans la première mémoire où est écrit le premier paquet (PQ$_{i1}$) de ladite trame lorsque le motif de début (DO) est détecté dans le premier paquet, et mémoriser une seconde adresse établie (AP$_{ij}$) d'une première case dans la première mémoire (21) où est écrit le paquet entrant (PQ$_{ij}$) de ladite trame,

ladite seconde adresse mémorisée ($AP_{ij}$) étant lue dans ladite cellule ($CC_i$) pour servir d'adresse d'écriture de la seconde mémoire (22) en réponse à l'étiquette ($ET_i$) détectée dans le paquet entrant suivant ($PQ_{i,j+1}$) de ladite trame,

ladite première adresse mémorisée ($AP_{i1}$) étant lue dans ladite cellule (CC) et étant écrite avec ladite étiquette ($ET_i$) de la trame ($TR_i$) dans une file (31, 32) constituant la quatrième mémoire en réponse au motif de fin détecté (DF) dans le dernier paquet ($PQ_{iJ}$) de ladite trame ($TR_i$) signalant l'écriture complète de tous les paquets de la trame dans la seconde mémoire (22),

et des moyens d'adressage en lecture (33) pour lire selon l'ordre chronologique des trames entrelacées et pour chaque trame complètement écrite, successivement l'adresse ($AP_{i1}$) de la première case ayant mémorisée la premier paquet de la trame et l'étiquette de la trame dans la file (31, 32), puis les adresses ($AP_{i2}$ à $AP_{iJ}$) écrites dans les secondes cases de la seconde mémoire (22) correspondant aux premières cases de la première mémoire (21) ayant mémorisé les paquets de la trame à partir de la seconde case ayant mémorisée l'adresse ($AP_{i2}$) de la première case dont l'adresse ($AP_{i1}$) a été lue précédemment dans la file (31, 32) et qui a mémorisé le second paquet ($PQ_{i2}$) de ladite trame, afin de lire les paquets ($PQ_{i1}$ à $PQ_{iJ}$) de ladite trame dans la première mémoire (21) consécutivement au moyen de ladite adresse de premier paquet ($AP_{i1}$) de ladite trame mémorisée dans la file (31, 32) et au moyen desdites adresses ($AP_{i2}$ à $AP_{iJ}$) lues consécutivement dans la seconde mémoire (22), et

des moyens (34) pour sérialiser les trames ($TR_i$) à partir des paquets ($PQ_{i1}$ à $PQ_{iJ}$) lus dans la première mémoire (21) en insérant entre les trames émises des mots de bourrage prédéterminés ("01111110") et transmettant les étiquettes ($ET_i$) lues dans la file (31, 32) en parallèle avec les paquets lus des trames respectivement.

2. Equipement conforme à la revendication 1, pour lequel les motifs de début et de fin de trame (DO, DF) et les mots de bourrage ("01111110") sont identiques.

3. Equipement conforme à la revendication 1 ou 2, caractérisé en ce que la cellule ($CC_i$) de la troisième mémoire (13) assignée à une trame ($TR_i$) mémorise, en outre, chaque mot de paquet entrant de la trame en réponse à l'étiquette ($ET_i$) détectée dans le paquet et mémorise un bit d'état ($BRT_i$) déterminé par les seconds moyens pour détecter (15,16), ledit bit d'état ($BRT_i$) ayant un premier état ("1") tant que le premier paquet ($PQ_{i1}$) de la trame n'est pas détecté et écrit dans la première mémoire (21), et ayant un second état ("0") en réponse au motif de début (DO) détecté dans le premier paquet ($PQ_{i1}$) dans la trame et jusqu'à la détection du motif de fin (DF) détecté dans le dernier paquet ($PQ_{iJ}$) dans la trame, lesdits seconds moyens pour détecter (15,16) comparant chacun des mots dans les paquets détectés de ladite trame au motif de début (DO) lorsque le bit d'état ($BRT_i$) est au premier état ("1"), et comparant la combinaison de chacun (Bq) desdits mots dans les paquets détectés et du mot (Bp) mémorisé dans ladite cellule ($CC_i$) avec des permutations de motif de fin (DF) lorsque le bit d'état ($BTR_i$) est au second état ("0").

4. Equipement conforme à l'une quelconque des revendications 1 à 3, caractérisé en ce que les premiers mots (B0) de paquet constituant des étiquettes ($ET_i$) ne sont pas écrits dans la première mémoire (21).

5. Equipement conforme l'une quelconque des revendications 1 à 4, caractérisé en ce que les moyens d'adressage en lecture (33) comprennent

des moyens (333ET, 334) pour lire l'adresse ($AP_{i1}$) mémorisée dans la file (31,32) et relative au premier paquet ($PQ_{i1}$) d'une trame complètement écrite ($TR_i$) en réponse à un signal (FNV) délivré par la file (31,32) lorsque celle-ci contien au moins une adresse de première case pour premier paquet de trame et en réponse à un signal (FTT) délivré par les moyens pour sérialiser (34) lorsque ceux-ci transmettront des mots de bourrage ("01111110"), et

des moyens (331, 331ET, 332, 332ET, 333) utilisés pour adresser en lecture chacune des cases de la première mémoire (21) contenant un paquet ($PQ_{ij}$) de ladite trame, comprenant des moyens pour adresser en lecture la case dans la première mémoire (21) ayant mémorisée le premier paquet ($PQ_{i1}$) d'une trame ($TR_i$) complètement écrite dans la première mémoire (21), des moyens pour adresser en lecture la case dans la seconde mémoire (22) ayant mémorisé l'adresse ($AP_{ij}$) de la première case contenant ledit paquet lorsque le paquet ($PQ_{i,j-1}$) de ladite trame précédant ledit paquet ($PQ_{ij}$) est lu, et des moyens recevant ladite adresse de première case ($AP_{ij}$) précédemment lue dans la seconde mémoire (22) pour adresser en lecture la case de la première mémoire (21) ayant mémorisé ledit paquet ($AP_{ij}$) lorsque la case dans la seconde mémoire (22) ayant mémorisé l'adresse ($AP_{i,j+1}$) de la première case contenant le paquet ($PQ_{i,j+1}$) succédant audit paquet ($PQ_{ij}$) est lue.

**6.** Equipement conforme aux revendications 4 et 5, caractérisé en ce que les moyens pour lire la case dans la première mémoire (21) ayant mémorisé le premier paquet (PQ$_{i1}$) d'une trame (TR$_i$) comprennent des moyens (333, 332ET) pour inhiber la lecture du second mot (B1 = DO) du premier paquet.

**7.** Equipement conforme à l'une quelconque des revendications 1 à 6, caractérisé en ce que les moyens pour sérialiser (34) comprennent

un premier registre à décalage (341) pour mémoriser successivement les mots de paquets (PQ$_{i1}$ à PQ$_{iJ}$) d'une trame lue dans la première mémoire (21) et un second registre à décalage (342) pour analyser les mots de paquets et pour mémoriser un mot de bourrage ("01111110") entre des lectures de trame,

un multiplexeur (344) ayant des entrées reliées aux sorties du second registre à décalage (342) pour multiplexer les trames lues avec des mots de bourrage,

un comparateur (345) reliés au second registre à décalage (342) pour comparer le contenu du second registre (342) avec un motif de fin de trame (DF) afin de détecter le motif de fin de chacune des trames lues, et

des moyens (34ET, 347, 343, 346) reliés auxdits moyens d'adressage en lecture (33) et audit comparateur (36) pour écrire un mot de bourrage dans le second registre à décalage (342) en réponse au motif de fin détecté (DF) d'une trame lue et lire les bits du mot de bourrage écrit par sélection cyclique des entrées du multiplexeur (344) entre des trames lues, et pour écrire successivement les mots de paquet mémorisés dans le premier registre (341) dans le second registre à décalage (342) et lire les bits de mots de paquet écrits en sélectionnant pendant toute la lecture de la trame une entrée du multiplexeur déterminé en fonction du nombre de bits du mot de bourrage précédant la trame lue et restant à transmettre lorsque le premier paquet de la trame est lu dans la première mémoire (21).

**8.** Equipement conforme à l'une quelconque des revendications 1 à 7, caractérisé en ce que les moyens pour établir les adresses (4) comprennent des moyens (42) pour fournir cycliquement les adresses (AP) des cases de la première mémoire (21) à la troisième mémoire (13) en réponse aux paquets détectés (PQ) respectivement.

**9.** Equipement conforme à l'une quelconque des revendications 1 à 8, caractérisé en ce que les moyens pour établir les adresses (4) comprennent des moyens (42) pour fournir les adresses (AP) des cases de la première mémoire (21) à la troisième mémoire (13) en reponse à des paquets entrants (PQ) en nombre (N) égal au nombre de cases dans la première mémoire (21) après la mise en fonctionnement (SD1) de l'équipement, des moyens d'adresses de case libre (43) pour mémoriser les adresses de cases de la première mémoire (21) lues par les moyens d'adressage en lecture (33), et des moyens (41) pour détecter la dernière adresse de case fournie (42) pour lire l'une des adresses de case mémorisée dans les moyens d'adresses de case libre (43) en réponse à chacun des paquets entrants succédant au paquet entrant écrit à la dernière adresse de case fournie.

**Claims**

**1.** Equipment receiving from a single transmission medium incoming packets of fixed length belonging to interlaced frames of various origins and made up of any number of bits for reconstructing multiplexed frames,

the incoming packets comprising a predetermined number (L = 16) of words (bytes), the incoming packets of a frame comprising each a first word (B0) constituting a label (ET$_i$) identifying the frame (TR$_i$), the second word (B1) in the first incoming packet (PQ$_{i1}$) of each of the frames being identical to a predetermined frame beginning pattern (DO = "01111110"), and the last incoming packet (PQ$_{iJ}$) in each of the frames containing a predetermined frame end pattern (DF = "01111110"),

said equipment comprising :

a first memory (21) comprising first locations for momentarily memorizing all the incoming packets (PQ$_{i1}$ toPQ$_{iJ}$) of each (TR$_i$) of the interlaced frames,

means (4) for establishing addresses of first locations intended for memorizing incoming packets,

a second memory (22) having a number of second locations at least equal to the number of first locations for memorizing the established addresses (AP$_{iJ}$) of first locations having memorized incoming packets,

a third memory (13) having cells (CC) allocated respectively to the interlaced frames (TR$_i$), a cell allocated to a frame (TR$_i$) memorising the established address (AP$_{ij}$) of the more recent incoming packet of the frame, and

a fourth memory (31, 32) for memorizing the addresses ($AP_{i1}$) of the first locations in the first memory having memorised first packets ($PQ_{i1}$),

characterized in that it comprised

first means (11) for detecting the labels ($ET_i$) in the incoming packets,

second means (15, 16) for detecting the beginning patterns (DO) and end patterns (DF) in the incoming packets,

the cell ($CC_i$) of the third memory (13) allocated to a frame ($TR_i$) being write addressed in response to the label ($ET_i$) detected in each of the incoming packets of said frame, for memorizing a first established address ($AP_{i1}$) of a first location in the first memory in which the first packet ($PQ_{i1}$) of said frame is written when the beginning pattern (DO) is detected in the first packet, and memorizing a second established address ($AP_{ij}$) of a first location in the first memory (21) in which the incoming packet ($PQ_{ij}$) of the said frame is written,

said second memorized address ($AP_{ij}$) being read in said cell ($CC_i$) to act as a write address of the second memory (22) in response to the label ($ET_i$) detected in the next incoming packet ($PQ_{i,j+1}$) of said frame,

said first memorized address ($AP_{i1}$) being read in said cell (CC) and being write with said frame ($TR_i$) label ($ET_i$) in a queue (31, 32) constituting the fourth memory in response to the detected end pattern (DF) in the last packet ($PQ_{iJ}$) of said frame ($TR_i$) indicating full writing of all the packets of the frame in the second memory (22),

and read addressing means (33) for reading in the chronological order interlaced frames and for each completely written frame, successively the address ($AP_{i1}$) of the first location having memorized the first packet of the frame and the label of the frame in the queue (31, 32), then the addresses ($AP_{i2}$ to $AP_{iJ}$) written in the second locations of the first memory (22) corresponding to the first locations of the first memory (21) having memorized the packets of the frame starting from the second location having memorized the address ($AP_{i2}$) of the first location which address ($AP_{i1}$) has previously been read in the queue (31, 32) and which has memorized the second packet ($PQ_{i2}$) of said frame, in order to read packets ($PQ_{i1}$ to $PQ_{iJ}$) of said frame in the first memory (21) successively by means of said address of first packet ($AP_{i1}$) of said frame memorized in the queue (31, 32) and by means of said addresses ($AP_{i2}$ to $AP_{iJ}$) read consecutively in the second memory (22), and

means (34) for serializing the frames from the packets ($PQ_{i1}$ to $PQ_{iJ}$) read in the first memory (21) by inserting predetermined filling words ("01111110") between the transmitted frames and transmitting labels ($ET_i$) read in the queue (31, 32) at the same time as the reading packets of frames respectively.

2. Equipment according to claim 1, wherein the frame end and beginning patterns (DO, DF) and the filling words ("01111110") are identical.

3. Equipment according to claim 1 or 2, characterized in that the cell ($CC_i$) of the third memory (12) allocated to a frame ($TR_i$) further memorizes each incoming packet word of the frame in response to the label ($ET_i$) detected in the packet and memorizes a state bit ($BRT_i$) determined by the second detecting means, said state bit ($BRT_i$) having a first state ("1") as long as the first packet ($PQ_{i1}$) of the frame is not detected and written in the first memory (21), and having a second state ("0") in response to the beginning pattern (DO) detected in the first packet ($PQ_{i1}$) of the frame and up to detection of the end pattern (DF) detected in the last packet ($PQ_{iJ}$) in the frame, said second detecting means (15, 16) comparing each of the words in the detected packets of said frame with the beginning pattern (DO) when the state bit ($BRT_i$) is at first state ("1"), and comparing the combination of each (Bq) of said words in the detected packets and the word (Bp) memorized in said cell ($CC_i$) with end pattern (DF) permutations when the state bit ($BTR_i$) is at the second state ("0").

4. Equipment according to any one of claims 1 to 3, characterized in that first packet words (B0) constituting labels ($ET_i$) are not written in the first memory (21).

5. Equipment according to in any one of claims 1 to 4, characterized in that read addressing means (33) comprise

means (333ET, 334) for reading the address ($AP_{i1}$) memorized in the queue (31, 32) and relating to the first packet ($PQ_{i1}$) of a completely written frame ($TR_i$) in response to a signal (FNV) delivered by the queue (31, 32) when the latter contains at least a first-location address for first frame packet in response to a signal (FTT) delivered by serializing means (34) when these transmit filling words

18

("01111110"), and

means (331, 331ET, 332, 332ET, 333) used to read address each of the locations of the first memory (21) containing a packet ($PQ_{ij}$) of said frame, comprising means for read addressing the location in the first memory (21) having memorized the first packet ($PQ_{i1}$) of a completely written frame in the first memory (21), means for read addressing the location in the second memory (22) having memorized the address ($AP_{ij}$) of the first location containing said packet when the packet ($PQ_{i,j-1}$) of said frame preceding said packet ($PQ_{ij}$) is read, and means receiving said first location address ($AP_{ij}$) previously read in the second memory (22) for read addressing the first location of the first memory (21) having memorized said packet ($AP_{ij}$) when the location in the second memory (22) having memorized the address ($AP_{i,j+1}$) of the first location containing the packet ($PQ_{i,j+1}$) following to said packet ($PQ_{ij}$) is read.

6. Equipment according to claims 4 and 5, characterized in that the means for reading the location in the first memory (21) having memorized the first packet ($PQ_{i1}$) of a frame comprise means (333, 332ET) for inhibiting reading of the second word (B1 = DO) of the first packet.

7. Equipment according to any one of claims 1 to 6, characterized in that serializing means (34) comprise a first shift register (341) for consecutively memorizing the packet words ($PQ_{i1}$ to $PQ_{iJ}$) of a frame read in the first memory (21) and a second shift register (342) for analyzing the packet words and for memorizing a filling word ("01111110") between reading frames,

a multiplexer (344) having inputs connected to outputs of the second shift register (342) for multiplexing frames read with filling words,

a comparator (345) connected to the second shift register (342) for comparing the content of the second register (342) with a frame end pattern (DF) in order to detect the end pattern in each of the read frames, and

means (34ET, 347, 343, 346) connected to said read addressing means (33) and to said comparator (36) for writing a filling word in the second shift register (342) in response to the detected end pattern (DF) in a read frame and for reading the bits of the filling word written by cyclically selecting the inputs of the multiplexer (344) between the read frames and for consecutively writing the packet word memorized in the first register (341) into the second shift register and reading the bits of the packet word written by selecting, throughout reading of the frame, a multiplexer input determined according to the number of filling word bits preceding the read frame and still to be transmitted when the first packet of the frame is read in the first memory (21).

8. Equipment according to any one of claims 1 to 7, characterized in that the address establishing means (4) comprise means (42) for cyclically supplying addresses (AP) of the locations of the first memory (21) to the third memory (13) in response to the detected packets (PQ) respectively.

9. Equipment according to any one of claims 1 to 8, characterized in that the addresses establishing means (4) comprise means (42) for supplying the addresses (AP) of the locations of the first memory (21) to the third memory (13) in response to incoming packets (PQ) of a number (N) equal to the number of locations in the first memory (21) after startup (SD1) of the equipment, free location address means (43) for memorizing the addresses of locations of the first memory (21) read by the read addressing means (33), and means (41) for detecting the last supplied location address (42) for reading one of the memorized location addresses in the free location address means (43) in response to each of the incoming packets following to the incoming packet written at the last address of the supplied location.

## Patentansprüche

1. Einrichtung, die aus einer selben Übertragungsbasis kommende Eingangspakete mit fester Länge aufnimmt, die zu Rahmen verschiedener Ursprünge gehören, die verschachtelt sind und aus einer beliebigen Anzahl von Bits bestehen, um gemultiplexte Rahmen wiederherzustellen,
   - wobei die Eingangspakete Wörter (Oktette) in vorbestimmter Zahl (L = 16) umfassen, wobei die Eingangspakete eines Rahmens jeweils ein den Rahmen ($TR_i$) identifizierendes Etikett ($ET_i$) bildendes erstes Wort (B0) umfassen, wobei das zweite Wort (B1) im ersten Eingangspaket ($PQ_{i1}$) jedes der Rahmen identisch mit einem vorbestimmten Rahmenanfangsmotiv (DO = "01111110") sind, und das zweite Eingangspaket ($PQ_{iJ}$) in jedem der Rahmen ein vorbestimmtes Rahmenendmotiv (DF = "01111110") enthält,

wobei die Einrichtung umfaßt:

- einen ersten erste Felder umfassenden Speicher (21) zum augenblicklichen Speichern sämtlicher Eingangspakete $(PQ_{i1})$ bis $(PQ_{iJ})$ jedes $(TR_i)$ der verschachtelten Rahmen,
- Mittel (4) zum Anlegen der Adressen von ersten Feldern, die zum Speichern der Eingangspakete bestimmt sind,
- einen zweiten Speicher (22), der eine Zahl zweiter Felder wenigstens gleich der Zahl von ersten Feldern aufweist, um angelegte Adressen $(AP_{ij})$ von ersten Feldern zu speichern, die Eingangspakete gespeichert haben,
- einen dritten Speicher (13), der jeweils den verschachtelten Rahmen $(TR_i)$ zugeordnete Zellen (CC) aufweist, wobei eine einem Rahmen $(TR_i)$ zugeordnete Zelle die angelegte Adresse $(AP_{ij})$ des neuesten Eingangspaketes des Rahmens speichert, und
- einen vierten Speicher (31, 32) zum Speichern der Adressen $(AP_{i1})$ der ersten Felder des ersten Speichers (21), der erste Pakete $(PQ_{i1})$ gespeichert hat,

dadurch **gekennzeichnet,** daß sie umfaßt:

- erste Mittel (11) zum Erfassen der Etiketten $(ET_i)$ in den Eingangspaketen,
- zweite Mittel (15, 16) zum Erfassen der Anfangsmotive (DO) und der Endmotive (DF) in den Eingangspaketen,
- wobei die einem Rahmen $(TR_i)$ zugeordnete Zelle $(CC_i)$ des dritten Speichers (13) durch das in jedem der Eingangspakete des Rahmens erfaßte Etikett $(ET_i)$ schreibadressiert wird, um eine erste angelegte Adresse $(AP_{i1})$ eines ersten Feldes im ersten Speicher zu speichern, wo das erste Paket $(PQ_{i1})$ des Rahmens geschrieben ist, wenn das Anfangsmotiv (DO) im ersten Paket erfaßt wird, und um eine zweite angelegte Adresse $(AP_{ij})$ eines ersten Feldes im ersten Speicher (21) zu speichern, wo das Eingangspaket $(PQ_{ij})$ des Rahmens geschrieben ist,
- wobei die zweite gespeicherte Adresse $(AP_{ij})$ in der Zelle $(CC_i)$ gelesen wird, um als Schreibadresse des zweiten Speichers (22) in Reaktion auf das im folgenden Paket $(PQ_{i,j+1})$ des Rahmens erfaßte Etikett $(ET_i)$ zu dienen,
- wobei die erste gespeicherte Adresse $(AP_{i1})$ in der Zelle (CC) gelesen wird und mit dem Etikett $(ET_i)$ des Rahmens $(TR_i)$ in einer den vierten Speicher bildenden Registerschlange (31, 32) in Reaktion auf das erfaßte Endmotiv (DF) im letzten Paket $(PQ_{iJ})$ des Rahmens $(TR_i)$ geschrieben wird, anzeigend das vollständige Schreiben sämtlicher Pakete des Rahmens in den zweiten Speicher (22),
- und Leseadressierungsmittel (33) zum sukzessiven Lesen der Adresse $(AP_{i1})$ des ersten Feldes, das das erste Paket des Rahmens und das Etikett des Rahmens in der Registerschlange (31, 32) gespeichert hat, nach der chronologischen Reihenfolge der verschachtelten Rahmen und für jeden vollständig geschriebenen Rahmen, dann der in die zweiten Felder des zweiten Speichers (22) geschriebenen Adressen $(AP_{i2}$ bis $AP_{iJ})$ entsprechend den ersten Feldern des ersten Speichers (21), die die Pakete des Rahmens gespeichert haben, ausgehend von dem zweiten Feld, das die Adresse $(AP_{i2})$ des ersten Feldes gespeichert hat, dessen Adresse $(AP_{i1})$ vorher in der Registerschlange (31, 32) gelesen worden ist und der das zweite Paket $(PQ_{i2})$ des Rahmens gespeichert hat, um die Pakete $(PQ_{i1}$ bis $PQ_{iJ})$ des Rahmens im ersten Speicher (21) nacheinander mittels der Adresse des ersten Paketes $(AP_{i1})$ des in der Registerschlange (31, 32) gespeicherten Rahmens und mittels der nacheinander im zweiten Speicher (22) gelesenen Adressen $(AP_{i2}$ bis $AP_{iJ})$ zu lesen, und
- Mittel (34) zum Serienwandeln der Rahmen $(TR_i)$ ausgehend von in dem ersten Speicher (21) gelesenen Paketen $(PQ_{i1}$ bis $PQ_{iJ})$, in dem zwischen den ausgegebenen Rahmen vorbestimmte Stopfwörter "01111110" eingefügt werden und die gelesenen Etiketten $(ET_i)$ in der Registerschlange (31, 32) jeweils parallel zu den gelesenen Paketen der Rahmen übertragen werden.

2. Einrichtung nach Anspruch 1, für die die Rahmenanfangs- und -endmotive (DO, DF) und die Stopfwörter ("01111110") identisch sind.

3. Einrichtung nach Anspruch 1 oder 2, dadurch **gekennzeichnet,** daß die einem gespeicherten Rahmen $(TR_i)$ zugeordnete Zelle $(CC_i)$ des dritten Speichers (13) außerdem jedes Eingangspaketwort des Rahmens in Reaktion auf das im Paket erfaßte Etikett $(ET_i)$ speichert und ein durch die zweiten Erfassungsmittel (15, 16) erfaßtes Zustandsbit $(BRT_i)$ speichert, wobei das Zustandsbit $(BRT_i)$ einen ersten Zustand ("1") aufweist, solange das erste Paket $(PQ_{i1})$ des Rahmens nicht erfaßt und in den ersten Speicher (21) geschrieben ist, und einen zweiten Zustand ("0") aufweist, in Reaktion auf das im

erste Paket ($PQ_{i1}$) im Rahmen erfaßte Anfangsmotiv (DO), und bis zur Erfassung des im letzten Paket ($PQ_{iJ}$) im Rahmen erfaßten Endmotivs (DF), wobei die zweiten Erfassungsmittel (15, 16) jedes der Wörter in den erfaßten Paketen des Rahmens mit dem Endmotiv (DO) vergleichen, wenn sich das Zustandsbit ($BRT_i$) im ersten Zustand ("1") befindet, und die Kombination jedes (Bq) der Wörter in den erfaßten Paketen und des in der Zelle ($CC_i$) gespeicherten Wortes (Bp) mit Endmotivpermutationen (DF) vergleichen, wenn sich das Zustandsbit ($BTR_i$) im zweiten Zustand ("0") befindet.

4. Einrichtung nach einem beliebigen der Ansprüche 1 bis 3, dadurch **gekennzeichnet,** daß die Etiketten ($ET_i$) bildenden ersten Paketwörter (B0) nicht in den ersten Speicher (21) geschrieben werden.

5. Einrichtung nach einem beliebigen der Ansprüche 1 bis 4, dadurch **gekennzeichnet,** daß die Leseadressierungsmittel (33) umfassen
    - Mittel (333ET, 334) zum Lesen der Adresse ($AP_{i1}$), die in der Registerschlange (31, 32) gespeichert ist und sich auf das erste Paket ($PQ_{i1}$) eines vollständig geschriebenen Rahmens ($TR_i$) bezieht, in Reaktion auf ein durch die Registerschlange (31, 32) ausgegebenes Signal (FNV), wenn diese wenigstens eine erste Feldadresse für ein erstes Rahmenpaket enthält, und in Reaktion auf ein durch die Serienwandlungsmittel (34) ausgegebenes Signal (FTT), wenn diese Stopfwörter ("01111110") übertragen werden, und
    - Mittel (331, 331ET, 332, 332ET, 333), die zur Leseadressierung jedes der Felder des ersten Speichers (21) verwendet werden, der ein Paket ($PQ_{ij}$) des Rahmens enthält, umfassend Mittel zum Leseadressieren des Feldes im ersten Speicher (21), das das erste Paket ($PQ_{i1}$) eines vollständig in den ersten Speicher (21) geschriebenen Rahmens ($TR_i$) gespeichert hat, Mittel zum Leseadressieren des Feldes im zweiten Speicher (22), das die Adresse ($AP_{ij}$) des das Paket enthaltenden ersten Feldes gespeichert hat, wenn das dem Paket ($PQ_{ij}$) vorhergehende Paket ($PQ_{i,j-1}$) des Rahmens gelesen wird, und die vorhergehend im zweiten Speicher (22) gelesene erste Feldadresse ($AP_{ij}$) aufnehmende Mittel, um das Feld des ersten Speichers (21) lesezuadres-sieren, das das Paket ($AP_{ij}$) gespeichert hat, wenn das Feld im zweiten Speicher (22) gelesen wird, das die Adresse ($AP_{i,j+1}$) des ersten Feldes gespeichert hat, das das auf das Paket ($PQ_{ij}$) folgende Paket ($PQ_{i,j+1}$) enthält.

6. Einrichtung nach den Ansprüchen 4 und 5, dadurch **gekennzeichnet,** daß die Mittel zum Lesen des Feldes im ersten Speicher (21), das das erste Paket ($PQ_{i1}$) eines Rahmens ($TR_i$) gespeichert hat, Mittel (333, 332ET) zum Verhindern des Lesens des zweiten Wortes (B1 = DO) des ersten Paketes umfassen.

7. Einrichtung nach einem beliebigen der Ansprüche 1 bis 6, dadurch **gekennzeichnet,** daß die Mittel zum Serienwandeln (34) umfassen
    - ein erstes Schieberegister (341) zum aufeinanderfolgenden Speichern der Paketwörter ($PQ_{i1}$ bis $PQ_{iJ}$) eines gelesenen Rahmens im ersten Speicher (21) und ein zweites Schieberegister (342) zum Analysieren der Paketwörter und zum Speichern eines Stopfwortes ("01111110") zwischen den Rahmenlesevorgängen,
    - einen Multiplexer (344), der mit den Ausgängen des zweiten Schieberegisters (342) verbundene Eingänge zum Multiplexen der gelesenen Rahmen mit den Stopfwörtern aufweist,
    - einen mit dem zweiten Schieberegister (342) verbundenen Komparator (345) zum Vergleichen des Inhalts des zweiten Registers (342) mit einem Rahmenendmotiv (DF), um das Endmotiv jedes der gelesenen Rahmen zu erfassen, und
    - Mittel (34ET, 347, 343, 346), die mit den Leseadressierungsmitteln (33) und mit dem Komparator (36) verbunden sind zum Schreiben eines Stopfwortes in das zweite Schieberegister (342) in Reaktion auf das erfaßte Endmotiv (DF) eines gelesenen Rahmens und zum Lesen der Bits des geschriebenen Stopfwortes durch zyklische Auswahl der Eingänge des Multiplexers (344) zwischen den gelesenen Rahmen, und zum aufeinanderfolgenden Schreiben der gespeicherten Paketwörter im ersten Register (341) im zweiten Schieberegister (342) und zum Lesen der Bits von geschriebenen Paketwörtern, wobei während des gesamten Lesevorganges des Rahmens ein bestimmter Multiplexereingang abhängig von der Zahl von Bits des dem gelesenen Rahmen vorhergehenden Stopfwortes ausgewählt wird und zu übertragen bleibt, wenn das erste Paket des Rahmens im ersten Speicher (21) gelesen wird.

8. Einrichtung nach einem beliebigen der Ansprüche 1 bis 7, dadurch **gekennzeichnet,** daß die Mittel zum Anlegen der Adressen (4) Mittel (42) zum zyklischen Liefern der Adressen (AP) der Felder des ersten Speichers (21) zum dritten Speicher (13) in Reaktion jeweils auf die erfaßten Pakete (PQ) umfassen.

9. Einrichtung nach einem beliebigen der Ansprüche 1 bis 8, dadurch **gekennzeichnet,** daß die Mittel zum Anlegen der Adressen (4) Mittel (42), um die Adressen (AP) der Felder des ersten Speichers (21) zum dritten Speicher (13) in Reaktion auf Eingangspakete (PQ) in der Zahl (N) gleich der Zahl von Feldern im ersten Speicher (21) nach der Inbetriebsetzung (SD1) der Einrichtung zu liefern, freie Feldadreßmittel (43), um die durch die Leseadressierungsmittel (33) gelesenen Adressen von Feldern des ersten Speichers (21) und Mittel (41) umfassen, um die letzte gelieferte Feldadresse (42) zu erfassen, um die eine der in den freien Feldadreßmitteln (43) gespeicherten Feldadressen in Reaktion auf jedes der Eingangspakete zu lesen, das auf das in die letzte gelieferte Feldadresse geschriebene Eingangspaket folgt.

FIG.1

# FIG. 2

$PQ_{i1}$  $PQ_{16}$  $PQ_{23}$  $PQ_{24}$  $PQ_{ij}$  $PQ_{25}$  $PQ_{iJ}$

$TR_1, ET_1$  $TR_i, ET_i$  $TR_2, ET_2$

# FIG.3

$PQ_{i1}$  DO  $PQ_{ij}$  $PQ_{iJ}$

| $B0 = ET_i$ |
| $B1 = 01111110$ |
| |
| B 15 |

16 octets

| $B0 = ET_i$ |
| B1 |
| |
| B 15 |

| $B0 = ET_i$ |
| |
| 0111 1110 | DF |
| |

ou   DF = "01111110"

11110

011

ou

DO   0 111110

0111

110

ou

$PQ_{iJ}$

| $B0 = ET_i$ |
| |
| 0 1111 |
| 110 |

$DF = "01111110"$

FIG.4

# FIG.5

EP 0 296 928 B1

## FIG. 6

| $B_p$ | | | | | | | | $B_q$ | | | | | | | |
|---|---|---|---|---|---|---|---|---|---|---|---|---|---|---|---|
| $bp_0$ | $bp_1$ | $bp_2$ | $bp_3$ | $bp_4$ | $bp_5$ | $bp_6$ | $bp_7$ | $bq_0$ | $bq_1$ | $bq_2$ | $bq_3$ | $bq_4$ | $bq_5$ | $bq_6$ | $bq_7$ |
| x | 0 | 1 | 1 | 1 | 1 | 1 | 1 | 0 | x | x | x | x | x | x | x |
| x | x | 0 | 1 | 1 | 1 | 1 | 1 | 1 | 0 | x | x | x | x | x | x |
| x | x | x | 0 | 1 | 1 | 1 | 1 | 1 | 1 | 0 | x | x | x | x | x |
| x | x | x | x | 0 | 1 | 1 | 1 | 1 | 1 | 1 | 0 | x | x | x | x |
| x | x | x | x | x | 0 | 1 | 1 | 1 | 1 | 1 | 1 | 0 | x | x | x |
| x | x | x | x | x | x | 0 | 1 | 1 | 1 | 1 | 1 | 1 | 0 | x | x |
| x | x | x | x | x | x | x | 0 | 1 | 1 | 1 | 1 | 1 | 1 | 0 | x |
| x | x | x | x | x | x | x | x | 0 | 1 | 1 | 1 | 1 | 1 | 1 | 0 |

## FIG.7

CIRCUIT DE MEMORISATION ET DE GESTION D'ADRESSES DE MEMOIRE

FIG. 8

EP 0 296 928 B1

FIG.9

EP 0 296 928 B1

# FIG.10

HO

HB

SC9

Sortie 3414 de 341
(FIG.8)

$bq_0$   $bq_1$   $bq_2$   $bq_3$   $bq_4$   $bq_5$   $bq_6$   $bq_7$

Bt

# FIG.11

temps

TD

DF

Sortie 3443 de 344
(FIG.7)

----0 1 1   1 1 1 1 0   $bq_0$   $bq_1$   $bq_2$   -------- 0 1 1   1 1 1 1 0 0 ----

MS

--- 0 1 2   2 2 2 2 2 2 2 2   ------- 2 2 2   3 4 5 6 7 0 ---

DF

MSa = 2